(19) **Europäisches Patentamt / European Patent Office / Office européen des brevets**

(11) **EP 1 374 515 B1**

(12) **EUROPEAN PATENT SPECIFICATION**

(45) Date of publication and mention
of the grant of the patent:
**01.08.2012 Bulletin 2012/31**

(51) Int Cl.:
**H04L 1/00** (2006.01)   **H04L 27/02** (2006.01)
**H04B 10/00** (2006.01)

(21) Application number: **01994491.7**

(22) Date of filing: **21.12.2001**

(86) International application number:
**PCT/US2001/050695**

(87) International publication number:
**WO 2002/067521 (29.08.2002 Gazette 2002/35)**

(54) **INCREASING DATA THROUGHPUT IN OPTICAL FIBER TRANSMISSION SYSTEMS**

ERHÖHEN DES DATENDURCHSATZES BEI FASEROPTISCHEN ÜBERTRAGUNGSSYSTEMEN

AUGMENTATION DU DEBIT DE DONNEES DANS DES SYSTEMES DE TRANSMISSION PAR FIBRE OPTIQUE

(84) Designated Contracting States:
**AT BE CH CY DE DK ES FI FR GB GR IE IT LI LU MC NL PT SE TR**

(30) Priority: **29.03.2001 US 279916 P**
**04.04.2001 US 281526 P**
**18.04.2001 US 284457 P**
**19.04.2001 US 284949 P**
**19.04.2001 US 284964 P**
**24.04.2001 US 286070 P**
**09.05.2001 US 289674 P**
**11.07.2001 US 304718 P**

(43) Date of publication of application:
**02.01.2004 Bulletin 2004/01**

(73) Proprietor: **Quellan, Inc.**
**Atlanta, GA 30318 (US)**

(72) Inventors:
• **VRAZEL, Michael, G.**
**Atlanta, GA 30318 (US)**

• **RALPH, Stephen, E.**
**Atlanta, GA 30328 (US)**
• **LASKER, Joy**
**Atlanta, GA 30328 (US)**
• **JUNG, Sungyong**
**Marietta, GA 30062 (US)**
• **HIETALA, Vincent, M.**
**Albuquerque, NM 87111 (US)**
• **GEBARA, Edward**
**Atlanta, GA 30308 (US)**

(74) Representative: **Grünecker, Kinkeldey, Stockmair & Schwanhäusser**
**Leopoldstrasse 4**
**80802 München (DE)**

(56) References cited:
**EP-A- 0 656 700    JP-A- 2000 244 586**
**US-A- 5 222 103    US-A- 5 282 072**
**US-A- 5 351 148    US-A- 5 870 668**
**US-A- 6 031 874    US-B1- 6 212 654**

**Description**

**PRIORITY AND RELATED APPLICATIONS**

The present application claims priority to provisional patent application entitled, "Multi-level Logic for Optical Transceivers," filed on December 21, 2000 and assigned U.S. Application Serial No. 60/257,598. The present application also claims priority to provisional patent application entitled, "Advanced Signal Encoding/Decoding Techniques for Equalization of Multilevel Optical Communication Signals," filed on December 21, 2000 and assigned U.S. Application Serial No. 60/257,596. The present application also claims priority to provisional patent application entitled, "Method for Mode Separation Imaging and Detection of the Distinct Spatial Modes of a Multimode Optical Fiber or Multimode Optical Cavity," filed on December 24, 2000 and assigned U.S. Application Serial No. 60/257,586. The present application also claims priority to provisional patent application entitled, "Higher Order Modulation Techniques for Optical Transceivers," filed on December 21, 2000 and assigned U.S. Application Serial No. 60/257,551. The present application also claims priority to provisional patent application entitled, "Method of QAM Generation and Demodulation Techniques," filed on April 19, 2001 and assigned U.S.. Application Serial No. 60/284,457. The present application also claims priority to provisional patent application entitled, "Mixed Signal Processing for Distortion Compensation of Multilevel Optical Communication Signals," filed on March 29, 2001 and assigned U.S. Application Serial No. 60/279,916. The present application also claims priority to provisional patent application entitled, "Automatic Threshold Tracking and Digitization Method for Multilevel Signals," filed on April 4, 2001 and assigned U.S. Application Serial No. 60/281,526. The present application also claims priority to provisional patent application entitled, "Parallel Noise Filtering for Multi-Level Optical Data Reception," filed on April 24, 2001 and assigned U.S. Application Serial No. 60/286,070. The present application also claims priority to provisional patent application entitled, "Adaptive Equalizer for Multi-Level Optical Data Receiver," filed on April 19, 2001 and assigned U.S. Application Serial No. 60/284,949. The present application also claims priority to provisional patent application entitled, "Linearization of Optical Modulation," filed on April 19, 2001 and assigned U.S. Application Serial No. 60/284,964. The present application also claims priority to provisional patent application entitled, "System and Method for Increasing Throughput in Optical Fiber Transmission Systems," filed on July 11, 2001 and assigned U.S. Application Serial No. 60/304,718. The present application also claims priority to provisional patent application entitled, "High-Speed Multilevel Light Modulator Driver Circuit," filed on May 9, 2001 and assigned U.S. Application Serial No. 60/289,674.

**FIELD OF THE INVENTION**

The present invention relates to optical fiber communication systems and more particularly relates to increasing the throughput of data transmission over an optical fiber communication system through the use of multilevel modulation.

**BACKGROUND OF THE INVENTION**

In virtually all fields of communications, there exists a persistent demand to transmit more data in less time. The amount of information that can be transmitted over a communications system (or through a component of that system) is referred to as the bit rate or the data throughput of the system. Traditionally, system throughput is increased by either increasing the number of channels carrying information or increasing the bit rate of each channel. In order to meet ever-increasing bandwidth demands, aggregate throughput in fiber optic transmission systems has conventionally been increased by using multiple Wavelength Division Multiplexed (WDM) channels, time-division-multiplexing (TDM), or some combination of the two techniques. WDM techniques increase the number of channels transmitted on a particular fiber, while TDM techniques increase the data rate of each individual channel.

Conventional optical fiber networks typically can deliver on the order of 10 Gigabits of data per second (10 Gb/s). Both WDM and TDM techniques have been applied to realize fiber channel bit rates well above this conventional 10 Gb/s capacity. Many fiber optic communication systems comprise multiple WDM channels simultaneously transmitted through a single optical fiber. Each of these channels operates independently at a given bit rate, $B$. Thus for an $m$ channel WDM system, the system throughput is equal to $m \cdot B$. Conventional dense WDM (DWDM) systems typically operate with 40 to 100 channels. There are certain restrictions, however, that limit the aggregate power that can be transmitted through a single DWDM optical fiber (i.e., the launch power). For example, eye safety power regulations and nonlinear effects in the fiber place limits on the aggregate launch power. In addition, channel spacing limitations and per-channel launch power, effectively limit the number of WDM channels that can be combined for transmission on a single fiber.

TDM techniques also are associated with various limitations. For example, using conventional TDM techniques to achieve an $n$-times increase in channel data rates requires the optical components of a link (e.g., the modulator and photodetector) to be replaced with new optical components having $n$-times the bandwidth of the original optical components. In addition, the interface circuitry must be replaced with new circuitry having bandwidth n-times greater than the original circuits.

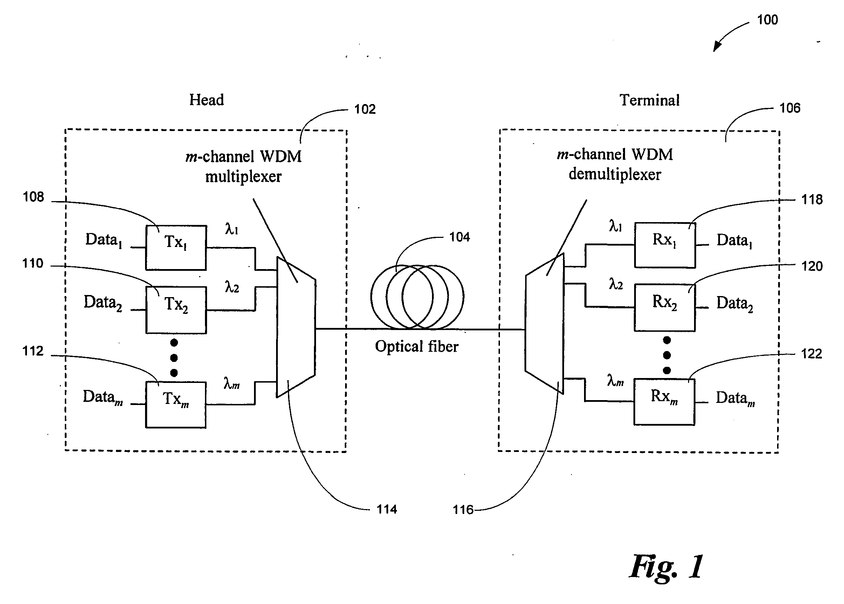

Optical fiber networks are typically comprised of a series of links that include a transmission block, a receiver block, and a long stretch of optical fiber connecting the two blocks (i.e., the optical plant). Figure 1 is a block diagram of a conventional *m*-channel WDM fiber optic transmission system link **100.** The fiber optic transmission system link **100** consists of a WDM transmission block **102** (denoted as the "Head"), the optical fiber **104**, and a WDM reception block **106** (denoted as the "Terminal"). The Head **102** comprises *m* transmitters **108-112** (labeled "Tx") and an *m*-channel WDM multiplexer **114**. Each transmitter **108-112** comprises an optical source (not shown) and all circuitry necessary to modulate the source with the incoming data stream. For the case of external modulation, the transmitter block also includes a modulator. The Terminal **106** comprises an *m*-channel WDM demultiplexer **116** and *m* receivers **118**-**122** (labeled "Rx"). Each receiver **118-122** comprises a photodetector (not shown) and all circuitry required to operate the detector and amplify the detected signal in order to output the original electrical data stream.

In order to realize channel data rates of 10 Gb/s and beyond, the optical fiber **104** as well as the Head **102** and Terminal **106** of the link **100** are typically upgraded to support the increased data rates. In order to increase the channel bit rates in this conventional link **100**, each transmission block **102** and reception block **106** must be replaced with optical components and circuitry capable of achieving the desired bandwidths. For high-speed channel bit rates (10 Gb/s and faster), the optical fiber **104** also must often be replaced in order to compensate for signal distortions, which are more prominent at higher data rates. This process can be particularly cumbersome and costly in a long-haul link where hundreds of kilometers of fiber must be replaced. For existing long-haul optical links, the complexity and cost of replacing planted fiber often represents a prohibitive barrier for increasing channel bit rates.

Service providers seeking to optimize revenue and contain cost prefer a highly granular, incremental expansion capability that is cost effective while retaining network scalability. The ability to increase the throughput capacity of single point-to-point links or multi-span links without upgrading or otherwise impacting the remainder of the network is highly desirable from an engineering, administrative and profitability standpoint.

In view of the foregoing, there is a need for a method of increasing a channel data rate in a fiber optics communication link that does not require replacing an existing optical fiber plant or necessitate a change in the expensive optical components. There exists a further need to increase the efficiency of the available spectrum within a given fiber optic communication link and to obtain efficient highly granular bandwidth upgrades without upgrades to an existing optical fiber plant, upgrades to channel combing optics, or significant changes to existing maintenance and administrative procedures. The method should further allow service providers to increase data throughput on a per-link basis as throughput demands increase, generating higher profitability for the service provider and lower cost for the consumer.

Document EP-A-0 656 700 relates to optical transmission of digital signals and aims at increasing the transmission speed of digital signals, i.e. the bit repetition rate to, for example, 40 Gbit/s and more, and describes an optical transmission system in whose optical transmitter 1 an electric multistage signal V comprising two electric digital signals V1, V2, modulates a semiconductor laser 4, so that an optical multistage signal V is transmitted optically. A discriminator circuit 7, which recovers the digital signals V1, V2, is provided in the optical receiver 2.

Document JP 200 244586 A describes a technique for densely and precisely receiving a multilevel digital signal by transmitting transmission information and a reference signal for demodulating this from a transmission side and demodulating information based on the amplitude of this reference signal on a receiving side. When a maximum light quantity in an information optical signal Ld is varied, the reference voltage Vref from a reference voltage reproducing circuit is varied to the direction of compensating the variation.

Document US-A-5 351 148 describes an optical transmission system for transmitting frequency division multiplex signals used for the CATV system and other systems. The optical transmission system provides digital signals which have added bits for error correction by an encoder which are converted into 16-QAM signals with a predetermined carrier frequency by a modulator, and then frequency division muitiplexed with an AM signal so as to be inputted to an optical-electric converter. The multiplexed signals are transmitted via optical fiber and converted into electric signals by a photo receiver, demodulated by a demodulator, and then outputted after having their errors corrected by an error corrector.

Document US-A-5 870 668 relates to an amplifier having distortion compensation to be used as a power amplifier for amplifying a linear modulated signal or a low noise amplifier for amplifying a linear modulated signal.

## SUMMARY OF THE INVENTION

The above problems and disadvantages of the prior art are solved by the present invention as claimed in the independent claims. Advantageous and preferred embodiments of the invention are defined by the dependent claims.

The present invention increases channel data throughput rates without requiring replacement of the existing optical fiber in a link (i.e., the optical fiber plant). In one aspect of the present invention, channel throughput is increased by upgrading the components and circuitry in the head and terminal of an optical fiber communication system link. Advantageously, the present invention can increase aggregate throughput in fiber optic links beyond the limits of conventional WDM upgrades, while eliminating the necessity of replacing existing fiber plants. In addition to providing an alternative to expensive TDM or WDM upgrades, the proposed invention may also be used in tandem with these approaches to achieve even greater increases in data transmission rates. The increase in system throughput is achieved by using advanced modulation techniques to encode greater amounts of data into the transmitted spectrum of a channel, thereby increasing the spectral efficiency of each channel. Representative modulation techniques include 2"-ary amplitude shift keying (2"-ASK), 2"-ary frequency shift keying (2"-FSK), 2"-ary phase shift keying (2"-PSK), as well as combinations of these techniques such as quadrature amplitude modulation (QAM). Because optical fiber has a finite bandwidth, these types of spectrally efficient modulation techniques provide a viable solution for extending channel data rates beyond the limits of standard OOK modulation. The spectral efficiency is improved because all 2"-ary variations occupy essentially the same optical bandwidth. Thus a link employing 16-level ASK modulation can have the same spectral occupancy as a 2-level OOK link.

The present invention provides a novel method of increasing transmission capacity by upgrading the head and terminal of the system to achieve greater spectral efficiency and hence throughput. The novel method eliminates the need to replace existing fiber plants. The advanced modulation techniques described above add little or no complexity to the optical components of the channel transmitter and receiver, further reducing the cost of a system upgrade. For 2"-ary ASK modulation, which uses 2" different signal levels (amplitudes) to form 2" different transmission symbols, an n-times increase in channel throughput can be provided using the same bandwidth, lasers, modulators, and photodetectors as those used in the original on-off-keyed (OOK) link. Spectrally efficient complex modulation techniques can be supported by interface circuits having an increased level of signal processing capability in order to both encode multiple bits into a transmitted symbol and decode the original data from the received symbols.

The present invention also provides novel signal processing methods that enhance the transmission of a multilevel optical signal over existing fiber optics communication systems. A novel pre-distortion circuit modifies the transmitted signal based on knowledge of prior data and known link linear and nonlinear performance. A novel linearizer circuit can be used to introduce a nonlinearity into a transmitted signal to precisely counteract any nonlinearities of the optical source. Additionally, a novel forward error correction process is used to enhance the quality of the decoded multilevel signal.

The various aspects of the present invention may be more clearly understood and appreciated from a review of the following detailed description of the disclosed embodiments and by reference to the drawings and claims.

## BRIEF DESCRIPTION OF THE DRAWINGS

Figure 1 is a block diagram of a conventional *m*-channel WDM fiber optic transmission system.

Figure 2 is a bock diagram of an *m*-by-*n*-channel WDM long-haul fiber optic link constructed in accordance with an exemplary embodiment.

Figure 3 is a diagram showing a representation example of a 16-level signal, where each symbol represents four independent bits, with one such representation shown to the right.

Figure 4 is a graph illustrating the optical power penalty as a function of normalized data rate for a multilevel ASK signal as compared to an equivalent data rate OOK signal.

Figure 5 is a block diagram of an exemplary transmitter.

Figure 6 is a block diagram of an alternative exemplary transmitter.

Figure 7 is a circuit diagram of a traditional laser driver.

Figure 8 is a circuit diagram of an exemplary multilevel laser driver.

Figure 9 is a schematic diagram of an exemplary adjustable binary-weighted multi-output current source.

Figure 10 is a circuit diagram of an exemplary pre-distortion compensation circuit.

Figure 11 is a diagram illustrating an example of a multilevel data stream.

Figure 12 is an illustration of an exemplary precompensation circuit.

Figures 13 (a) and (b) are diagrams of the typical nonlinearities of (a) Mach-Zehnder modulators and (b) directly modulated laser diodes.

Figure 14 is a circuit diagram of an exemplary linearization network applied to a directly modulated laser diode.

Figure 15 is a circuit diagram of a exemplary linearization network applied to a voltage driven optical modulator.

Figure 16 is a schematic diagram of the general structure of a nonlinear element (NLE).

Figure 17 is an illustration of the current contributions resulting from the two types of branch networks making up a nonlinear network.

Figure 18 is a block diagram of an exemplary receiver.

Figure 19 is a block diagram of an exemplary programmable transversal filter (PTF).

Figure 20 is a block diagram of an exemplary adaptive equalizer.

Figure 21 is a block diagram of an exemplary multi-level parallel noise filter.

Figure 22 is a timing diagram for an exemplary N-channel parallel optimal-filter.

Figure 23 is a block diagram of an exemplary N-channel parallel optimal-filter.

Figures 24 (a) and (b) are an eye-diagram of the simulated data of a 16-level transmission and a histogram of the data, which clearly shows the location of the "eyes":

Figure 25 is a block diagram of an exemplary 4-level multi-level receiver.

## DETAILED DESCRIPTION OF THE EXEMPLARY EMBODIMENTS

Exemplary embodiments of the present invention enable an increase in channel data rates without the replacement of an existing optical fiber plant. Various embodiments of the present invention use a novel multilevel modulation technique to effect a substantial increase in data rate. Advantageously, various embodiments of the present invention enable a substantial data throughput increase in a fiber optics communication system without requiring a modification of the optical fiber plants associated with the system. Specifically, the increase in data rate can be accomplished in various embodiments of the present invention by upgrading head and terminal components, namely, the system transmitters and receivers. The transmitters and receivers can be modified to include advanced $2^n$-*ary* modulation (demodulation) technology for encoding (decoding) greater amounts of data within the channel spectrum. Representative advanced modulation techniques include multilevel amplitude, frequency and phase shift keying modulations. An exemplary transmitter comprises an *n*-channel encoder, a digital-to-analog converter (DAC), pre-compensation circuitry, and an optical source. An exemplary receiver comprises an optical detector, distortion post-compensation circuits, an analog-to-digital converter (ADC), and an *n*-channel decoder.

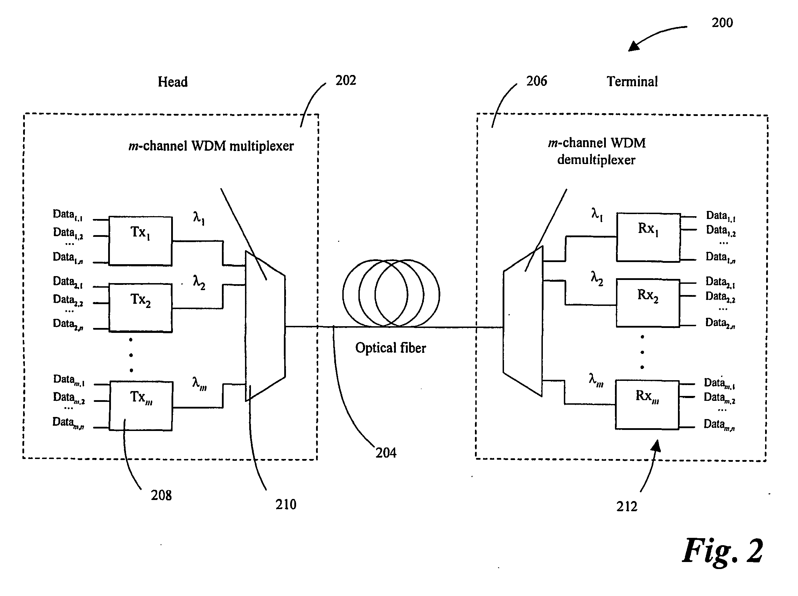

Figure 2 is a block diagram of an *m*-by-*n* channel WDM optical transmission system **200** comprising a WDM transmission block (denoted as the "head") **202**, the optical fiber **204**, and a WDM reception block (denoted as the "terminal") **206.** The head **202** comprises *m n*-channel transmitters (labeled "Tx") **208** and an *m*-channel WDM multiplexer **210**. Each transmitter **208** comprises an optical source and all circuitry necessary to modulate the source with the incoming data stream. For the case of external modulation, the transmitter block also can include a modulator (not shown). The terminal comprises *m n*-channel receivers (labeled "Rx") and an *m*-channel WDM demultiplexer. Each receiver typically comprises a photodetector and all circuitry required to operate the detector and to amplify the detected signal in order to output the original electrical data stream.

In comparison to the prior art optical transmission system illustrated in Figure 1, the system of Figure 2 has been upgraded for increased channel data rates by replacing each transmitter and each receiver of Figure 1 with multilevel modulation technology transmitters and receivers. Representative advanced modulation techniques include $2^n$-ASK, $2^n$-FSK, $2^n$-PSK, and combinations of these techniques (i.e. $2^n$-QAM). Significantly, the increase in system throughput achieved by the transmission system of Figure 2 is achieved without replacing the optical fiber network or the interface components connected to the transmitters **208** and to the receivers **212**.

The embodiment presented herein provides a method of generating and receiving light to form a spectrally-efficient high-speed ASK optical link. It will be appreciated by one skilled in the art that an FSK signal can be converted into an ASK signal by using a conventional filter, and similarly a PSK signal can be converted into an ASK signal by using a conventional interferometer. QAM modulation is a combination of PSK and ASK and can thus be converted into two ASK data streams. Therefore, the exemplary embodiment addresses the enabling technologies required to process high-speed multilevel signal streams of which ASK is exemplary.

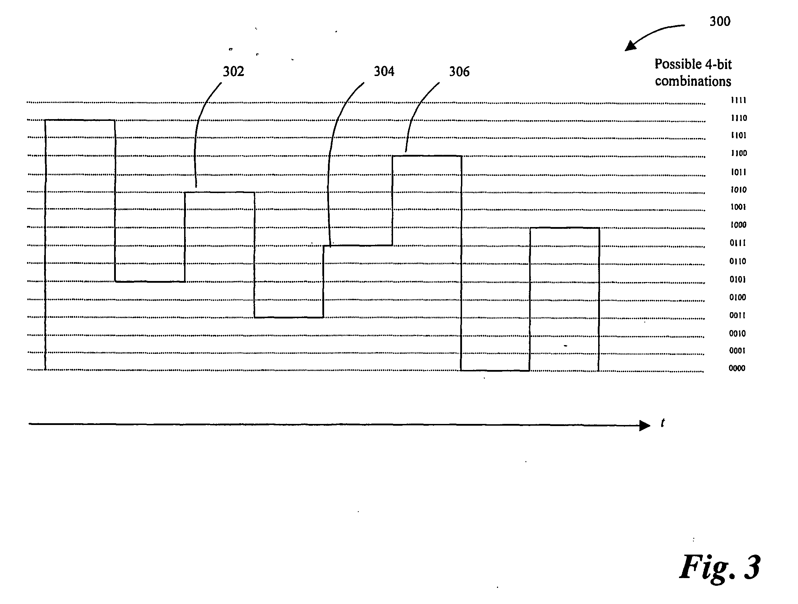

Figure 3 depicts an exemplary multilevel ASK signal **300**, combining four bits (i.e., 16 possible amplitude levels) into each single transmitted pulse, or symbol. A multilevel signal allows for more than one bit to be transmitted per clock cycle, thereby improving the spectral efficiency of the transmitted signal. For multilevel optical transmission, some characteristic (i.e., signal property) of a transmitted pulse (such as amplitude, phase, etc.) is modulated over $2^n$ levels in order to encode $n$ bits into the single pulse, thereby improving the spectral efficiency of the transmitted pulse. Multilevel modulation can increase aggregate channel throughput by combining $n$ OOK data streams (each with bit rate, $B$, in bits/s) into one $2^n$- level signal (with a symbol rate, $B$, in symbols/s) for an aggregate throughput (in bits/s) that is $n$ times greater than $B$. The aggregate data rate of the signal shown in Figure 3 is four times greater than a corresponding OOK signal with a bit rate equal to the multilevel symbol rate. As the simplest case, OOK can be regarded as a two level multilevel signal where the symbol rate and bit rate are equal.

As a specific example, the assumption may be made that the 16-level signal in Figure 3 has a symbol rate of 2.5 Gsym/s. That is, a pulse e.g., **302-306** with one of 16 possible amplitudes is transmitted at a rate of 2.5 Gigapulses/s. Therefore, the aggregate data rate of the 16-level signal is actually 10 Gb/s (4 x 2.5 Gb/s) because each pulse (i.e., symbols) can represent a distinct value of four bits. The optical components required to transmit and receive a 16-level 2.5 Gsym/s signal are nearly identical to those required for transmitting and receiving an OOK 2.5 Gb/s signal. The components are at least a factor of two times less costly than the components required for an OOK 10 Gb/s signal. In addition, the 2.5 Gsym/s signal, while providing an aggregate throughput of 10 Gb/s, is less susceptible than an OOK 10 Gb/s signal to dispersion limitations in the fiber, minimizing the need for dispersion compensation in the system, and in some cases allowing installed links to operate at higher data rates than possible without multilevel signaling. These factors can significantly reduce system costs while realizing high-speed optical links.

The improved spectral efficiency and reduced system costs afforded by multilevel amplitude modulation are offset to some degree by a corresponding degradation in the signal-to-noise ratio (SNR) of the signal due to the reduced energy separation between signals. For example, modeling channel distortions as additive, white Gaussian noise (independent of the transmitted signal), the received power penalty necessary to achieve the same error performance for a multilevel ASK signal compared to an OOK signal with equal symbol rate is described by the equation:

$$\Delta P = -10 \log(2^n - 1)$$

where $\Delta P$ is the penalty (in dB) and $2^n$ is the number of levels. This penalty compares the proposed approach using a data rate $n$ times faster than the baseline OOK modulation. One can also compare the two methods using the same data rate. The power penalty for this case is:

$$\Delta P' = -10 \log([2^n - 1]/\sqrt{n}).$$

The penalty is lower for this constant data rate comparison because the reduced bandwidth for the proposed multilevel scheme allows for higher out-of-band noise suppression. The penalty $\Delta P'$ does not take into account the effects of dispersion. These effects are negligible at data rates on the order of 2.5Gb/s but can be quite significant at data rates 10Gb/s and higher. Thus, the penalty $\Delta P'$ is overstating the penalty associated with multilevel signaling because the signal model for the high rate OOK scheme neglects the significant effects of dispersion

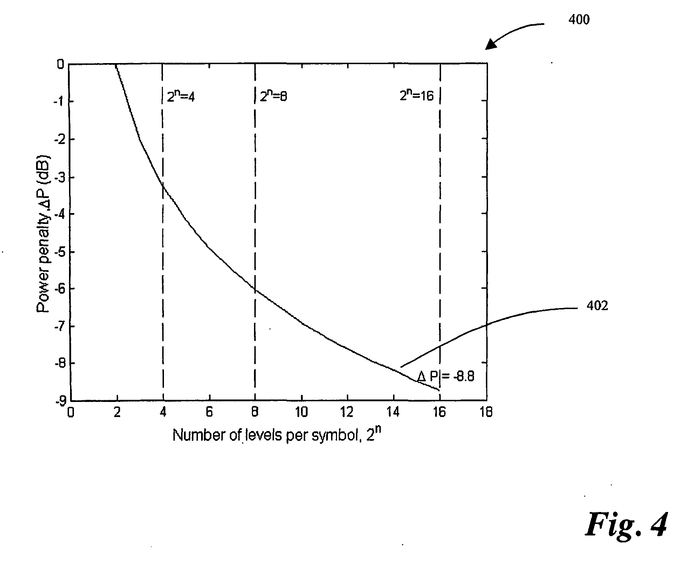

Figure 4 is a graph **400** depicting a curve **402** representing an exemplary optical power penalty for OOK and multilevel signals as a function of normalized aggregate data rate. The plot displays the increase in signal power required for multilevel signaling to achieve the same error rate as OOK signaling operating at the same data rate. If the power penalty associated with multilevel optical transmission can be overcome with signal processing gains, this method of data transmission can be a viable, cost effective solution for realizing high-speed fiber optic links. Various embodiments of the present invention are described below and address methods of overcoming this optical power penalty.

**An Exemplary Transmitter**

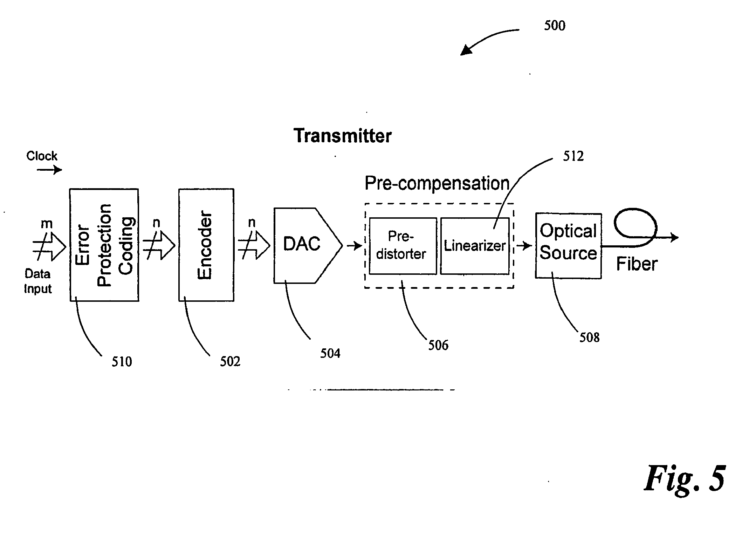

Figure 5 is a block diagram depicting multilevel ASK optical transmitter **500** that is an exemplary embodiment of the present invention. The transmitter **500** typically comprises an error protection coding (EPC) module **510**, an *n*-channel encoder **502**, a Digital to Analog Converter DAC **504**, pre-compensation circuitry **506**, and an optical source **508**. The combination of the error protection coding (EPC) module **510**, *n*-channel encoder **502**, Digital to Analog Converter DAC **504**, and pre-compensation circuitry **506** may be referred to as a symbolizer. The electronics of the transmitter **500** are termed the "symbolizer", since they generate the $2^n$ distinct symbols from one or more binary data input streams. The EPC module **510** maps an *m*-bit word (that consists of a single bit from each of the *m* input data streams) into an *n*-bit word where $n \geq m$. The data is processed by this module so that when decoded in the receiver, the protected word is robust to bit errors introduced by the encoding/transmission/decoding process.

For every clock cycle, the encoder **502** converts the protected n-bit word into a second "error-resistant" *n*-bit word. Gray codes, such as the Q-Gray code shown in Table 1, are an example of "error-resistant" codes, where Q-Gray codes are defined to be a class of Gray codes satisfying the property that the maximum number of transitions on each bit is minimized as one cycles through the sequence. This limitation on the maximum number of transitions produces codes that surpass tradition Gray-codes in that the impact of errors in excess of adjacent levels is minimized. For example, the Q-Gray code in Table 1 has a maximum of four transitions (which is the minimum value possible) on any bit as one cycles through the sequence. The traditional reflected Gray code, however, has eight transitions on the least significant bit and thus does not meet our definition of a Q-Gray code. It should be obvious to one skilled in the art, that a set of equivalent Q-Gray codes that can be formed from the one tabulated in Table 1. The bit columns can be arbitrarily rearranged, the columns can be inverted, and the code can be "rotated" in 16 different ways, resulting in a total of 6144 equivalent codes that we term "Q-Gray codes". The encoded n-channels are input to the DAC **504**, which generates a $2^n$-level electrical signal that can be used to modulate the optical source **508**. The optical source **508** could in practice be a directly modulated laser or a laser with an external modulator and can transmit distinct data values (symbols) by transmitting varying levels of optical intensity over an optical communication medium, such as an optical fiber.

**Table 1**. Binary encoding schemes for 16 level transmission.

| Transmitted Level | Conventional Binary | Reflected Binary (Gray code) | Q-Gray Code |
|---|---|---|---|
| 15 | 1111 | 1000 | 1000 |
| 14 | 1110 | 1001 | 1010 |
| 13 | 1101 | 1011 | 1110 |
| 12 | 1100 | 1010 | 1100 |
| 11 | 1011 | 1110 | 0100 |
| 10 | 1010 | 1111 | 0101 |
| 9 | 1001 | 1101 | 1101 |
| 8 | 1000 | 1100 | 1001 |
| 7 | 0111 | 0100 | 1011 |
| 6 | 0110 | 0101 | 1111 |
| 5 | 0101 | 0111 | 0111 |
| 4 | 0100 | 0110 | 0110 |
| 3 | 0011 | 0010 | 0010 |
| 2 | 0010 | 0011 | 0011 |
| 1 | 0001 | 0001 | 0001 |
| 0 | 0000 | 0000 | 0000 |

In an exemplary embodiment of the present invention, four digital channels can be input to the EPC module **510**. The EPC module **510** makes the data more robust by sending an extra *n-m* bits of data for every *m* input bits. These redundant error correction (EC) bits allow for the correction by the receiver of bit errors incurred during the encoding/transmission/decoding process. One skilled in the art will recognize that a variety of existing algorithms may be used to accomplish this. Typical algorithms included Reed-Solomon codes, Reed-Muller codes, block codes, convolutional codes, and trellis codes to name a few. The additional data introduced by the EPC module may be addressed either by increasing the system clock rate or by using more than four channels throughout the remainder of the system. Both addresses are transparent to the proposed invention as they simply correspond to a change in an operational parameter. In particular, increasing the clock rate involves sending pulses with a shorter duration, and using more channels involves using a larger value for n. Thus, no generality is lost in assuming that the clock rate is increased and number of data channels is kept at four for the purpose of describing the invention.

The EPC module 510 feeds the processed data into the encoder 502. The four encoded channels can then be input to the DAC 504 and converted to one of 16 possible amplitude levels for a four times increase in data throughput. The encoding function of the four-channel encoder 502 as well as the corresponding DAC output is summarized in Table 2.

Table 2. Q-Gray encoding and DAC output.

| Input Four-Bit Word | Q-Encoded Four-Bit Word | Level Output by DAC |
|---|---|---|
| 1111 | 1000 | 8 |
| 1110 | 1010 | 10 |
| 1101 | 1110 | 14 |
| 1100 | 1100 | 12 |
| 1011 | 0100 | 4 |
| 1010 | 0101 | 5 |
| 1001 | 1101 | 13 |
| 1000 | 1001 | 9 |
| 0111 | 1011 | 11 |
| 0110 | 1111 | 15 |
| 0101 | 0111 | 7 |
| 0100 | 0110 | 6 |
| 0011 | 0010 | 2 |
| 0010 | 0011 | 3 |
| 0001 | 0001 | 1 |
| 0000 | 0000 | 0 |

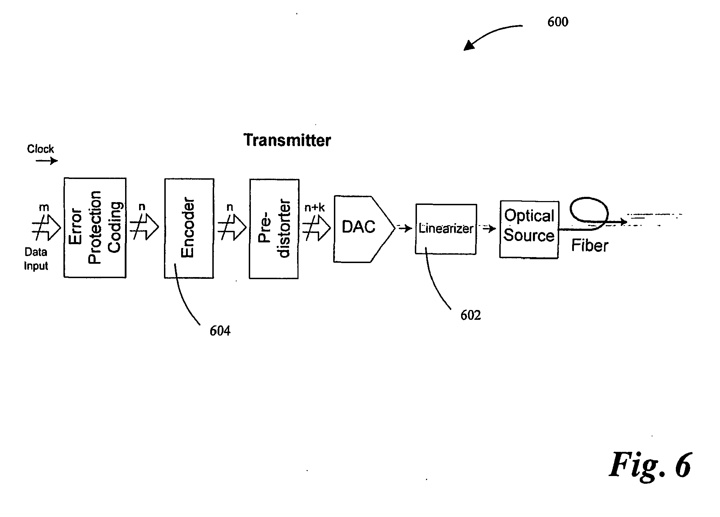

Pre-distortion of the transmitted data can help compensate for non-ideal link frequency response and for some classes of link non-linearities, effectively reducing pattern-dependent errors in the transmitted data. Hence, this technique is often referred to as pre-compensation. This pre-distortion (as described below) may operate at the analog/symbol level as shown in Figure 5 or on the digital level as shown in the transmitter 600 of Figure 6. Either method can be algorithmically identical and selected based on the cost of implementation. An exemplary linearization circuit block 512, 602 is shown in both Figure 5 and Figure 6. These circuits can linearize the optical source, which is expected to be the most nonlinear element in the optical link. The functional blocks, less the optical source shown in Figures 5 and 6, can be integrated into one circuit or multichip module.

A number of coding options exist to accomplish the desired EC necessary to compensate for the power penalty associated with multilevel amplitude modulation. The EPC 510 will be responsible for implementing such algorithms. An exception to this is the implementation of Gray codes (as described in U.S. Patent No. 2,632,058), which are an example of block coding with $m=n$. The Gray code can be implemented in the encoder since it corresponds to a one-to-one mapping, which can be implemented with a small logic circuit. In the '058 patent referenced above, a method of encoding binary notation is described such that adjacent words in the code are differentiated by a change in only one bit. This method can be distinguished from conventional binary notation where adjacent words often differ by several bits. For example, the binary equivalent of 7 in a four-bit word is 0111. The binary equivalent of 8 (an adjacent "word" to 7) is 1000; each of the four bits is reversed. Although the teaching in the '058 patent pertains to pulse code modulation, the same principles can be applied to multilevel amplitude modulation. If conventional binary notation is used to encode four data streams into a single 16-level stream, the bit error rate (BER) of the channels will be especially sensitive to those transitions between adjacent levels that involve a change of greater than one bit. Thus, Gray codes can reduce bit error rates (without the addition of redundant EC bits) in systems where the channel rate is increased using multilevel encoding. As stated above, Table 1 relates a conventional binary encoding for a 16-level (four channels) transmission to various Gray code encoding schemes. Each of the digits in the four-bit words shown in the table represents a transmitted bit from one of the four independent data streams. The binary reflected notation is described in the '058 patent. The alternative Gray code (which we will denote as Q-Gray code for simplicity) is presented in the table as an alternative embodiment of the Gray code implementation for multilevel amplitude modulation. In addition to the adjacent levels differing by only one bit, the alternative code can further enhance channel BERs because, for each individual channel, several adjacent levels do not effect a change in the transmitted bit value for that channel.

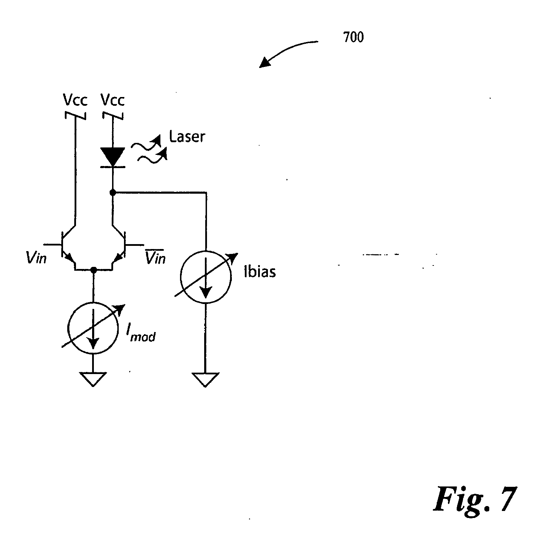

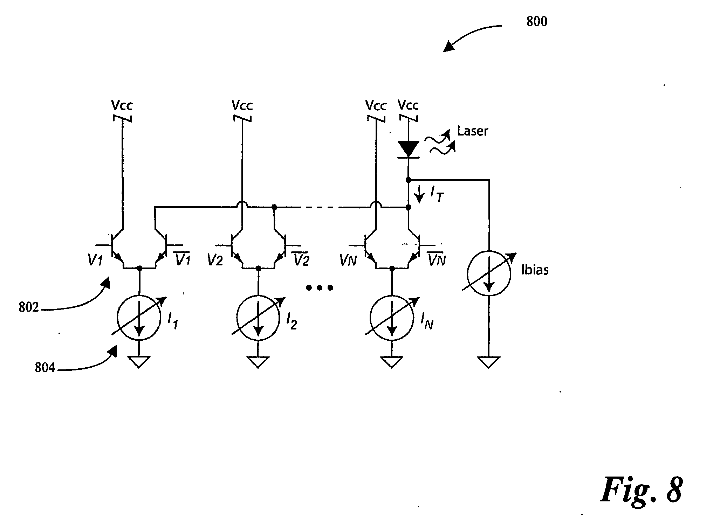

The encoders (**502**, **603**) depicted in Figure 5 and Figure 6 can perform, among other things, the encoding function described in Table 2. Those skilled in the art will understand that various combinational logic circuits can be designed to perform an encoding function. Figure 8 is a block diagram depicting an exemplary embodiment of a DAC **800**, which can best be used to directly drive a laser diode. The circuit of Figure 8 is similar to the conventional laser driver circuit **800** of Figure 7 with the exception that the differential switch transistors (e.g., **802**) and modulation current source (e.g. **804**) are divided up into $N$ appropriately binary-divided parts. In this manner, the multilevel driver **800** is anticipated to exhibit very similar speed properties as a conventional driver **700**.

During circuit operation, the individual $N$ bits ($A_i$) of a binary encoded binary word, $A$, are individually applied to the respective differential switch inputs (e.g., 806). A binary word is assumed to be made up of $N$ bits ($A_N$, $A_{N-1}$, ...$A_2$, $A_1$) of value 0 to 1, and the decimal value, $D_W$, of the word is shown in Equation 1:

$$D_W = A_N \cdot 2^{N-1} + A_{N-1} \cdot 2^{N-2} + ... + A_2 \cdot 2 + A_1 = \sum_{i=1}^{N} A_i \cdot 2^{i-1} \qquad (1)$$

This is the conventional definition of a binary encoded word. The corresponding differential inputs for each $i$th binary bit, $A_i$, are labeled $V_i$ and $V_i'$ to represent the fact that the actual voltages used to represent the binary levels are not 0 and 1. Nevertheless, it is assumed that the differential switch is driven appropriately for one of each of the switches' transistors to be "on" for any given logic state.

The current sources $I_1$ through $I_N$ are binary weighted as follows in Equation 2:

$$I_i = \frac{I_{\mathrm{mod}}}{2^N - 1} \cdot 2^{i-1} \ , \qquad (2)$$

where $I_{mod}$ is the modulation current of the traditional laser driver circuit. The $N$ individual bits of the applied binary word drive the respective switch that controls the current source determined in Equation (2). This results in a total current, $I_T$, of Equation 3:

$$I_T = \sum_{i=1}^{N} A_i \cdot I_i = \sum_{i=1}^{N} A_i \cdot \frac{I_{\mathrm{mod}}}{2^N - 1} \cdot 2^{i-1} \qquad (3)$$

Grouping the constant terms in Equation (3) gives the definition of total current shown in Equation 4:

$$I_T = K \cdot \sum_{i=1}^{N} A_i \cdot 2^{i-1} \qquad (4)$$

in which the constant K is defined in Equation 5:

$$K = \frac{I_{\mathrm{mod}}}{2^N - 1} \qquad (5)$$

Comparing Equation (4) to Equation (1) shows that the resulting total output current, $I_T$, is a perfect analog representation of the decimal value of the binary word. This circuit **800** effectively forms a large-current digital-to-analog converter.

The speed of the multilevel driver **800** can be similar to the speed of the conventional driver **700** if the differential switches **802** and current sources **804** are appropriately scaled for device size. The size of the transistors **802** used for the circuit **800** directly impacts circuit speed. In general, the smaller the transistors used to perform a circuit's function, the faster the circuit. For the i current paths of the modulator, the current level through each path is proportional to $2^{i-1}$. Therefore the transistor sizes, $S_i$, of both the differential switch **802** and current sources **804** can be scaled by as shown in Equation 6:

$$S_i = \frac{S_o}{2^N - 1} \cdot 2^{i-1} \ ,\qquad\qquad (6)$$

where So is the size of the conventional laser drivers transistors (FET width or BJT area). With this device scaling, the total device size of all current paths, which is a good indicator of circuit speed is defined in Equation 7:

$$S_T = \sum_{i=1}^{N} S_i = \frac{S_o}{2^N - 1} \sum_{i=1}^{N} 2^{i-1} \equiv S_o \qquad\qquad (7)$$

The total device "size" of all current paths is identical to the conventional driver circuit **700** and therefore should exhibit a very similar circuit speed.

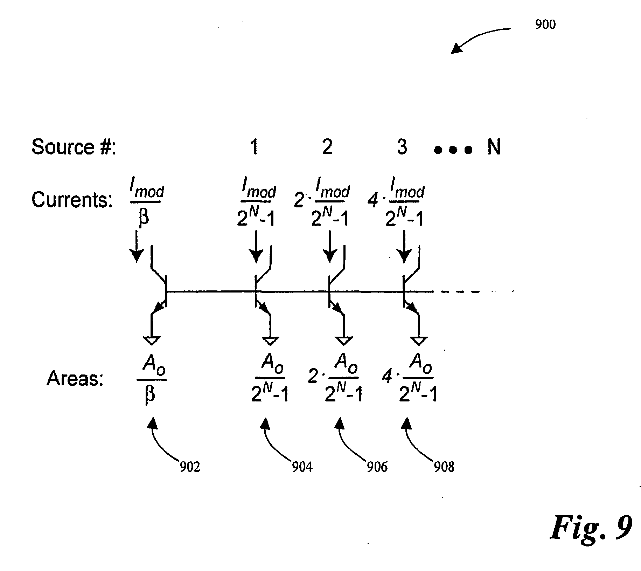

The plurality of current sources **804** shown in Figure 8 can be conveniently realized by using scaled current mirrors as shown in Figure 9. In this circuit **900**, the BJT area is scaled to provide precise current scaling. A current injected into the reference BJT **902** will be "mirrored" as per area ratios to the multiple BJT current source outputs **904-908**. The injected current on the reference BJT **902** sets the current range for the circuit **900**. The actual input current used to control the plurality of sources can be scaled as desired as shown by a scaling factor β. If FET devices are used to realize this circuit, the FET widths can be similarly scaled.

This circuit **900** is a high-output-current digital-to-analog converter, which can be applied to a variety of applications including the driving of laser diodes. In particular, if the laser diode shown in Figure 8 was replaced with a load resistor, the binary controlled current will be converted to a voltage allowing for the drive of other voltage-controlled optical modulators (e.g., the Mach-Zehnder modulator). This exemplary DAC **900** can be used to directly drive an optical source or drive other pre-compensation networks, which subsequently drive the optical source.

The pre-compensation blocks shown in Figure 5 and Figure 6 will appropriately modify the transmitted signal to produce a faithful output at the receiver. An exemplary pre-compensation block **506** comprises a pre-distortion circuit **511** and a linearizer **512**. The pre-distortion circuit **511** can modify the transmitted signal based on knowledge of prior data and known link linear and nonlinear performance. The linearizer circuit **512** can present a nonlinearity, which ideally exactly counteracts the nonlinearities of the optical source. Furthermore, the pre-compensation block, which operates at a particular symbol rate, also enables the simultaneous optimization of the transmitted phase when the information is contained in the symbol amplitude. Thus, well known modulation techniques, such as duobinary, can be readily combined with the pre-compensation function.

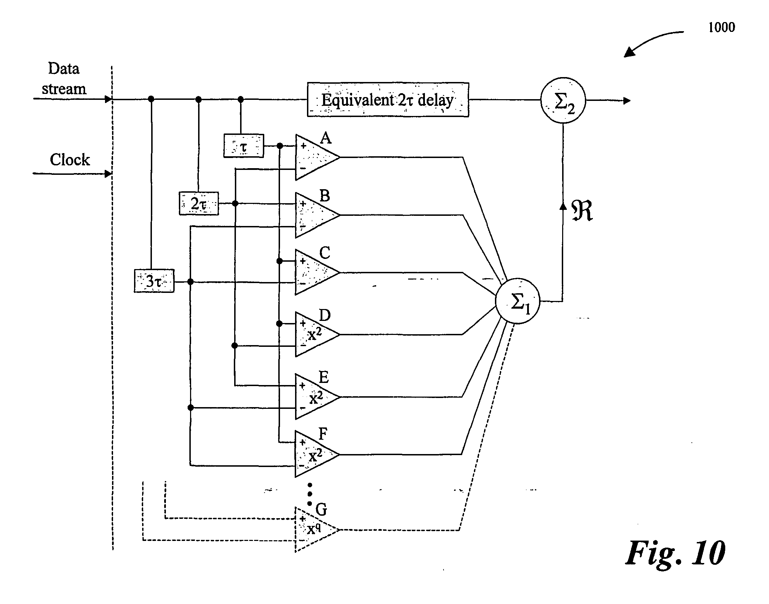

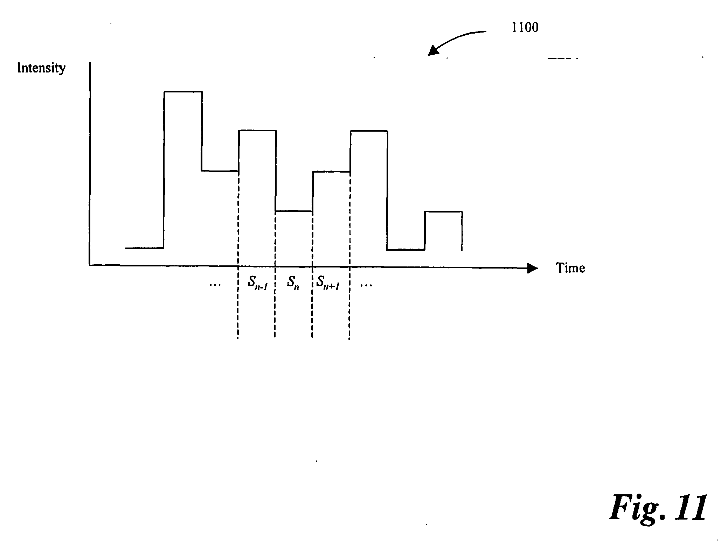

Figure 10 is a block diagram depicting an exemplary embodiment of a pre-distortion channel compensator **1000** for the multilevel transmitter **500** shown in Figure 5. In this embodiment, the amplitude of the symbol to be transmitted can be modified based on the amplitudes of preceding and succeeding symbols to ensure that the receiver and decoder are able to accurately detect the proper symbol amplitude after transmission. The incoming electrical multilevel data stream is tapped (i.e., interrogated) and subsequently delayed with three separate delays so that all three signals can be analyzed. As an example, each delay may consist of a transmission line. The delay associated with each tap (τ, 2τ, and 3τ) is shown in Figure 10 with τ = 1/(symbol rate). Thus each tapped delay line isolates one of a set of adjacent symbols to be transmitted. Specifically, the 2τ tap, for a given clock cycle, represents the multilevel symbol to be transmitted during that clock cycle, while for the same clock cycle, the τ and 3τ taps represent the succeeding and preceding symbols in the data stream, respectively. This concept is illustrated in Figure 11, where in a multilevel amplitude modulated signal **1100** is depicted. $S$n represents the symbol to be transmitted, and $S_{n+1}$ and $S_{n-1}$ represent the succeeding and preceding symbols in the data stream.

Returning to Figure 10, each of the differential amplifiers A, B, and C linearly amplifies the difference between two of the tapped symbols. The function of each of these amplifiers is represented by the Equations 8-10 below:

$$G_A(S_{n+1} - S_n) = A \cdot (S_{n+1} - S_n) \qquad\qquad (8)$$

$$G_B(S_n - S_{n-1}) = B \cdot (S_n - S_{n-1}) \tag{9}$$

$$G_C(S_{n+1} - S_{n-1}) = C \cdot (S_{n+1} - S_{n-1}) \tag{10}$$

where $G_k$ is the gain of the amplifier (with $k = A$, $B$, or $C$).

The differential amplifiers D, E, and F are second order amplifiers and operate by amplifying the square of the difference between two of the tapped symbols. The function of each of these amplifiers is described by Equations 11-13:

$$G_D(S_{n+1} - S_n) = D \cdot (S_{n+1} - S_n)^2 \tag{11}$$

$$G_E(S_{n+1} - S_n) = E \cdot (S_{n+1} - S_n)^2 \tag{12}$$

$$G_F(S_{n+1} - S_n) = F \cdot (S_{n+1} - S_n)^2 \tag{13}$$

The differential amplifier G shown in Figure 10 indicates that higher order functionality is easily included in this signal-processing filter. Any two of the tapped symbols can be input to the amplifier such that amplification of order $q > 2$ is performed on the difference between the symbols. The specific inputs are not specified in the figure to indicate that any of the symbols may be input to the amplifier. It should be clear to one skilled in the art that this design lends itself to the inclusion of additional higher-order (i.e., q > 2) differential amplifiers (H, I, J, etc.), which are not explicitly shown in the figure.

The element $\Sigma_1$ sums the output symbols from the differential amplifiers A through G, generating the polynomial R shown in Equation 14:

$$\mathfrak{R} = A \cdot (S_{n+1} - S_n) + B \cdot (S_n - S_{n-1}) + C \cdot (S_{n+1} - S_{n-1}) \tag{14}$$

$$+ D \cdot (S_{n+1} - S_n)^2 + E \cdot (S_n - S_{n-1})^2 + F \cdot (S_{n+1} - S_{n-1})^2 + G \cdot (...)^q$$

As an example, $\Sigma_1$ may be an adder or a power combiner.

The element $\Sigma_2$ (which, as an example, may be an adder or a power combiner) sums R with the symbol to be transmitted ($S_n$) in the data stream. For this reason, the data stream must be delayed by an amount equivalent to the delay applied to the tapped $S_n$ symbol. For the case shown in Figure 10, the necessary delay would be $2\tau$. In addition, the clock signal used in conjunction with a timing recovery circuit may be required at $\Sigma_2$ in order to ensure proper synchronization of the data stream with R. Thus, the circuit **1000** shown in Figure 10 will transmit the symbol for each symbol in the data stream. In this way, the symbol $S_n$ is predistorted by the amount R to ensure that $S_n$ is accurately received after transmission.

Figure 10 depicts an exemplary embodiment of a generalized precompensation technique. This technique may include, for example, corrections that are proportioned to the difference between the preceding and succeeding symbols, identified with the coefficient C in Figure 10. It will be appreciated by those skilled in the art that higher order corrections are possible. As long as the channel distortions are "well-behaved," the number of correction terms in R will be limited and the circuit implementation simplified.

Those skilled in the art will appreciate that the method of precompensation described above also may be implemented with a pre-determined, stored digital mapping function or lookup table. In such a case, the appropriate modification to the transmitted output symbol, as determined by the lookup table, may be based on characteristics of the symbol itself as well as those of one or more preceding and succeeding output symbols. For example, a 16 level system ($n$=4) which interrogates 3 input symbols, (i.e., the symbol to be transmitted and the preceding and succeeding pulse) requires 4096 table entries. For high symbol rates (e.g., 2.5 Gsym/s and greater), the implementation of a large lookup table can become increasingly complex. Hence, the previously described analog circuit embodiment, which is designed to approximate the functionality of a lookup table, may be preferred. In either case, the lookup table entries or the coefficients of the circuit implementation may be dynamically updated to maintain the desired system performance.

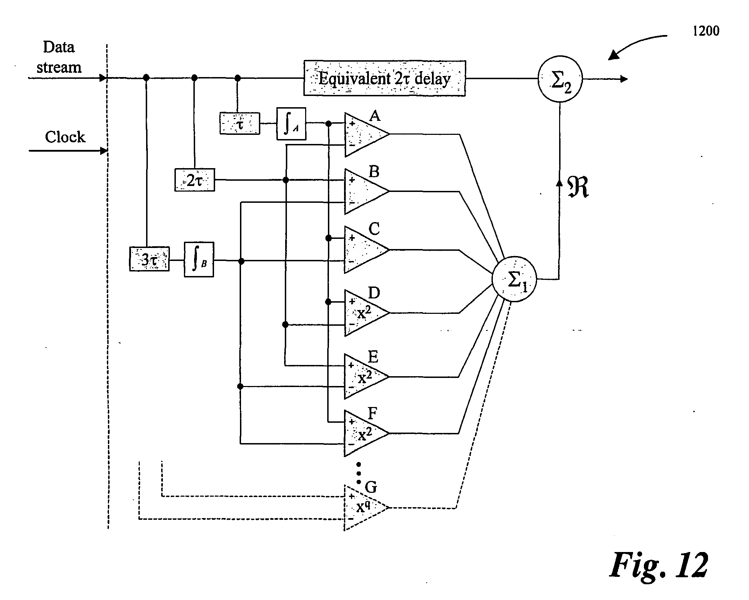

Figure 12 is a block diagram depicting an alternative embodiment of the precompensation filter **1200**. While similar in operation to the exemplary embodiment depicted in Figure 10, this exemplary embodiment has integrator circuits A **1202** and B **1204** integrated with the delay lines corresponding to the preceding and succeeding symbols in the data stream. These integrator circuits **1202**, **1204** have time constants that are equal to some value slightly larger than the inverse of the symbol rate. Thus, the integrations performed by the circuits act over a period greater than one symbol length, effectively extending the set of symbols used to determine R to include information regarding symbols just beyond the boundary of the set. For example, the precompensation factor for the embodiment shown in Figure 12 can be expressed as shown in Equation 15:

$$\Re = A \cdot \left( \int S_{n+1} dt - S_n \right) + B \cdot \left( S_n - \int S_{n-1} dt \right) + C \cdot \left( \int S_{n+1} dt - \int S_{n-1} dt \right) \qquad (15)$$

$$+ D \cdot \left( \int S_{n+1} dt - S_n \right)^2 + E \cdot \left( S_n - \int S_{n-1} dt \right)^2 + F \cdot \left( \int S_{n+1} dt - \int S_{n-1} dt \right)^2 + G \cdot (...)^q$$

The limits of integration in the above expression can be set to some interval of time greater than the inverse of the symbol rate. In this way, the integration path is extended beyond the bit length of the symbol in the integrand in order to include information regarding neighboring symbols in the data stream. Thus, the expression above, in reference to Figure 12 now takes into account information regarding the symbols $S_{n+2}$ and $S_{n-2}$, which are beyond the set of symbols $\{S_{n-1}, S_n, S_{n+1}\}$. The integrated symbols along with the symbol $S_n$ can be amplified (as before) by linear and higher order amplifiers. As in the previous case, synchronization of the data stream and R may be required at $\Sigma_2$.

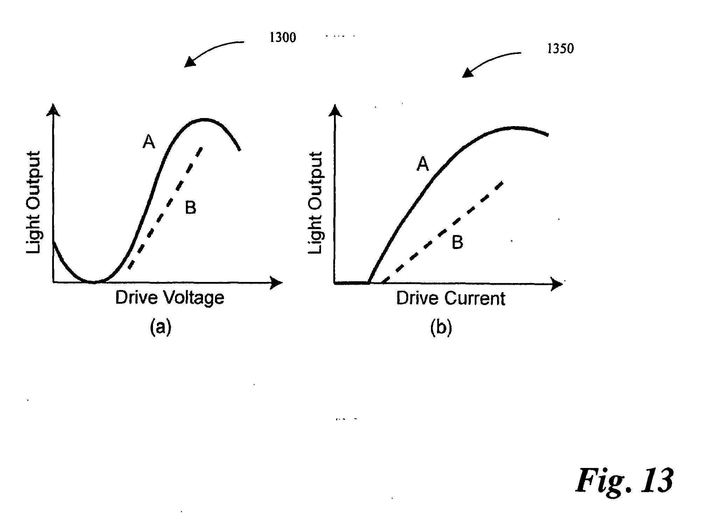

Figure 13 is a pair of graphs **1300**, **1350** depicting typical light output versus input current of a laser diode, and control voltage of an M-Z modulator. Both device classes suffer from a random offset (i.e. termed the threshold current on a laser), which can be handled by a simple offset current or voltage by the driver circuit. The objective here is to linearize these transfer curves like the linear ones labeled as "B" in each graph.

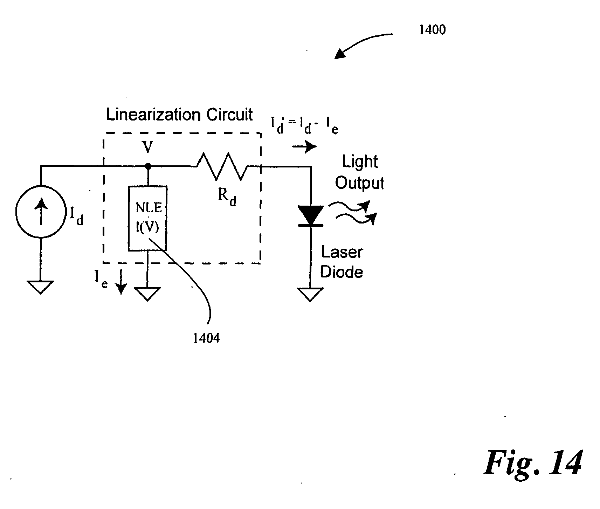

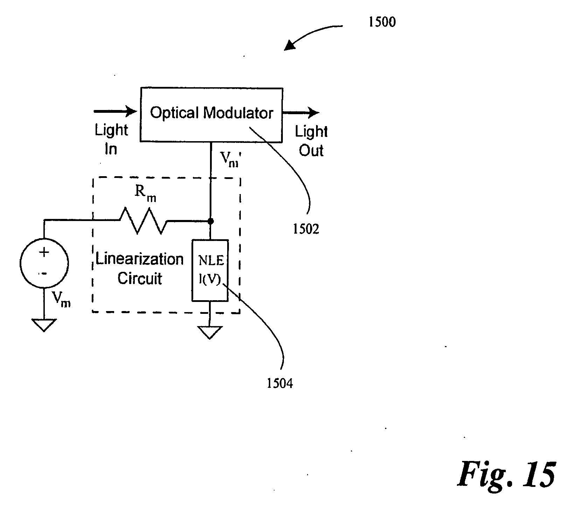

Figure 14 is a block diagram of linearization circuit **1400** for a laser diode that is an exemplary embodiment of the present invention. Figure 15 is a block diagram of linearization circuit **1500** for a voltage driven optical modulator such as a (M-Z) Mach-Zehnder modulator. For both of these approaches, a linearization circuit **1400**, **1500** is added to provide a predistortion to the drive current or voltage to linearize the resulting optical output. To linearize a laser diode, the linearization circuit subtracts an "error" current, $I_e$, from the drive current, $I_d$, such that a laser terminal current, $I_d'$, is adjusted to produce a light output linear with $I_d$. Similarly, to linearize a voltage driven modulator **1502** as shown in Figure 15, a linearization circuit **1500** is added to appropriately adjust the voltage to result in a linear output light level in terms of the drive voltage $V_m$.

Figure 14 depicts an exemplary circuit diagram of a laser diode linearization network that is an exemplary embodiment of the present invention. A special nonlinear element (labeled NLE) **1404** produces a linear light output in terms of the drive current, $I_d$. This linear light output, $L$, can be described in Equation 16 as:

$$L = \begin{cases} 0 & for \quad I_d < I_o \\ \alpha \cdot (I_d - I_o) & for \quad I_d \geq I_o \end{cases} \qquad (16)$$

in which $L$ is the light output, $\alpha$ is the slope of the output versus drive current, and $I_o$ is the zero light output current. The light output produced by the laser diode is some nonlinear function, $L_D(I_d')$, of the laser's drive current, $I_d'$, as shown by Equation 17:

$$L = L_D\left(I_d'\right) \qquad (17)$$

The objective is to have $I_d'$ be a function of $I_d$, such that Equation (16) and Equation (17) are identical, or algebraically for $I_d > I_o$:

$$\alpha \cdot (I_d - I_o) = L_D\left(I_d'\right) \qquad (18)$$

In practice, this equality can only be maintained over a limited device operating range. By current conservation:

$$I_d' = I_d - I_e \quad (19)$$

where $I_e$ the nonlinear element's terminal current which is a function the element's terminal voltage, V. The circuit dictates that V is:

$$V = V_d\left(I_d'\right) + R_d \cdot I_d' \quad (20)$$

in which $V_d(I_d')$ is the laser diode's junction voltage.

After combining Equations (18), (19), and (20), and simplification to eliminate $I_d$, the necessary parametric function form for the nonlinear element required to linearize the light output is shown in Equation 21:

$$I_e\left(V_d\left(I_d'\right) + R_d \cdot I_d'\right) = \frac{L_D\left(I_d'\right)}{\alpha} - I_d' + I_o \quad (21)$$

Since the laser characteristics. $V_d(I)$, $R_d$, and $L_D(I)$ are known and $I_o$ and $\alpha$ can be selected as desired, the necessary $I_e(V)$ for linear operation is now known by this equation.

Referring to Equation (21), the product of $R_d$ and $I_d'$ is added to the laser diode's operating voltage in the nonlinear element's terminal voltage (argument on the left-hand side of equation). This allows for the nonlinear element to be realizable using a simple circuit as presented below.

Linearization of a voltage controlled light modulator is similarly performed as depicted in Figure 15. In the circuit **1500** depicted in Figure 15, a nonlinear element (NLE) **1504** has a voltage dependant current, which causes an input-voltage dependent voltage drop across the resistor, $R_m$. This voltage drop across $R_m$ is designed to precisely counteract the nonlinearity of the modulator. The objective is to provide a light output, which is linear with drive voltage:

$$L = \begin{cases} 0 & for \quad V_m < V_o \\ \beta \cdot (V_m - V_o) & for \quad V_m \geq V_o \end{cases} \quad (22)$$

The light output from the modulator is determined by some known nonlinear function, $L_M$:

$$L = L_M\left(V_m'\right) \quad (23)$$

Equating Equations (22) and (23), for $V_m > V_o$:

$$\beta \cdot \left(V_m - V_o\right) = L_M\left(V_m'\right) \quad (24)$$

From Figure 15, the voltage, $V_m'$, across the nonlinear element is:

$$V_m' = V_m - R_m \cdot \left(I_e\left(V_m'\right) + I_m\left(V_m'\right)\right) \quad (25)$$

in which $I_m(V)$ is the modulators current and is zero for many voltage-controlled modulators. Equations (23), (24), and (25) can be solved for $I_e$ in terms of the modulator voltage $V_m'$ to give:

$$I_e\left(V_m^{'}\right)=\frac{1}{R_m}\left(\frac{L_M\left(V_m^{'}\right)}{\beta}+V_o-V_m^{'}\right)-I_m\left(V_m^{'}\right) \qquad (26)$$

Equation 26 gives the functional form of $I_e$ required for linear light output with $V_o$ and $\beta$ being free scalar parameters.

Thus, the necessary current voltage characteristics of the nonlinear element have been determined, but not the nonlinear element itself. Preferably, the nonlinear element is passive (plus diodes). This will restrict the nonlinear element to only exhibit a positive differential resistance/conductance. That is, the current can only increase (or remain constant) with increasing applied voltage. This places restrictions on the resulting modulation sensitivities ($\alpha$ and $\beta$).

For the laser diode linearization circuit, differentiating Equation (18) and solving for the partial derivative of $I_e$ with respect to $I_d^{'}$ gives Equation 27:

$$\frac{\partial I_e}{\partial I_d^{'}}=\frac{1}{\alpha}\frac{\partial L_D\left(I_d^{'}\right)}{\partial I_d^{'}}-1 \qquad (27)$$

The left-hand side of Equation (29) must be positive since the differential resistance of the series combination of the laser diode and resistor, $R_d$, must be positive and as discussed above the conductance of the nonlinear element must be positive. Algebraically,

$$\frac{\partial I_e}{\partial I_d^{'}}=\frac{\partial I_e}{\partial V}\frac{\partial V}{\partial I_d^{'}}\geq 0 \qquad (28)$$

Combining Equations (27) and (28) gives:

$$\alpha \leq \frac{\partial L_D\left(I_d^{'}\right)}{\partial I_d^{'}} \qquad (29)$$

for all operating currents, $I_d^{'}$. This sets the linearized slope efficiency to be less than or equal to the original laser slope efficiency.

Similarly, for the voltage controlled optical modulator, assuming that the modulator conducts no current:

$$\beta \leq \frac{\partial L_M\left(V_m^{'}\right)}{\partial V_m^{'}} \qquad (30)$$

for all modulator voltages, $V_m^{'}$. If the modulator conducts current, the slope efficiency will be lower because of the losses introduced by $R_m$.

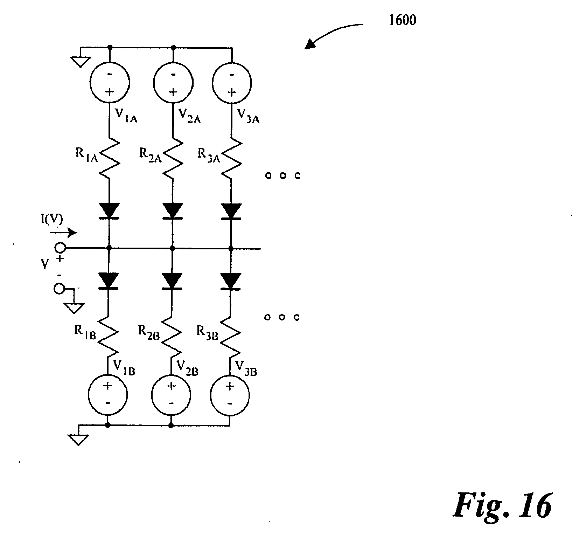

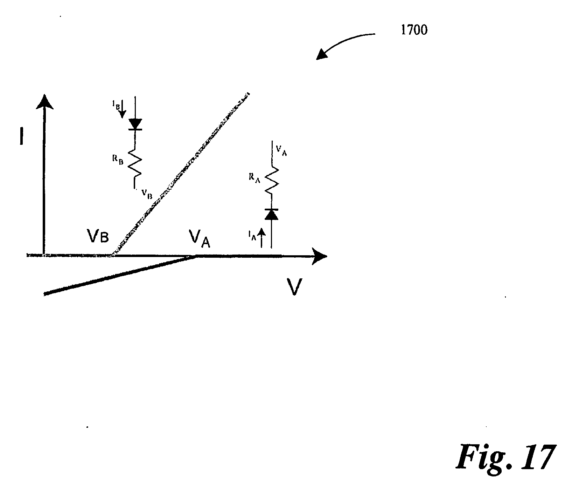

An exemplary embodiment of the nonlinear element **1600** is shown in Figure 16. For simplicity and ease of manufacture, the circuit **1600** comprises series-connected resistor and diode networks. These networks are biased to a set voltage (labeled $V_{nx}$), which along with the diode built in voltage sets a turn-on voltage where at above or below (depending on the diode polarity) the resistor is added into the circuit. The nonlinear response of typical configurations of each type of branch network is illustrated in the graph **1700** depicted in Figure 17. Note that the basic I(V) characteristic of these networks is two linear segments separated by a voltage breakpoint. An appropriately selected plurality of these networks allows the synthesis of the shape of an arbitrary I(V) curve with the restriction of positive slope and the addition of an arbitrary offset current or voltage. This offset can fortunately be absorbed within the arbitrary offsets $I_o$ and $V_o$. The actual synthesis of the network is difficult analytically due to the lack of orthogonality of the resulting basis functions. Nevertheless, trial and error techniques with conventional circuit simulation programs can easily yield an effective network. Due to the basic I(V) characteristics of the branch networks (linear segments with voltage breakpoint), the resulting approximation will be a so-called "piece-wise linear approximation".

In actual implementation, voltage sources with the single series resistor configuration may not be used. Instead, a Thevenin equivalent network may be synthesized from the system power supply and a series combination of two resistors. The resistors $R_1$ and $R_2$ are selected such that:

$$V_A = \frac{R1}{R1+R2}V_{CC} \quad and \quad R_A = \frac{R1 \cdot R2}{R1+R2} \tag{31}$$

where $R_1$ is connected from ground to the diode and $R_2$ is connected from the $R_2$ diode junction to $V_{cc}$.

The approach described herein addresses static linearization. The embodiments shown are anticipated to be integrated in microelectronic circuits allowing for very low parasitics and high-quality microwave diodes. Therefore, the linearization circuit may be expected to have a very large bandwidth. It may be assumed that the dynamic response of the laser diode or optical modulator is the same as static up to the operating speed. This is justified by the fact that an optoelectronic or electronic device's operational bandwidth is roughly defined by the frequency where the dynamic performance is no longer similar to the static and it is assumed that the device being linearized is being operated at a frequency within it's bandwidth. Additionally, it should be obvious to one skilled in the art that reactive impedance matching can occur between the device and the linearization network to help mitigate this issue.

In summary, the linearization network illustrated in Figure 14 works by a nonlinear element shunting the appropriate amount of current from a drive current to result in a linear light output of a nonlinear current drive optical modulator device. Similarly, as illustrated in Figure 15, a voltage controlled nonlinear optical modulator device, is linearized by the addition of a series resistance, which converts the nonlinear shunt current into a nonlinear voltage drop to result in a linear light output. The topology of the nonlinear element is illustrated in Figure 16. In this circuit a plurality of shunt connected diode-resistor circuit branches are selected to synthesis the required nonlinear current vs. voltage curve to linearize the optical modulator.

The light source is assumed to be amplitude controlled and of adequate coherence to be used in WDM systems. It is desired that the source be as linear as possible, though as just described in the previous section, linearization networks can be used to improve linearity. The light source will need to have an electrical bandwidth commensurate with the symbol rate of the communication link. This will be much lower than the link's aggregate data rate and therefore represents significant cost advantage at moderate speeds (less than or equal to 10 Gb/s) and enabling technology at high data rates (over 40 Gb/s). Preferred light sources include direct modulation of laser diodes, and externally modulated laser sources (i.e., Mach-Zehnder, or Electro-Absorptive modulators).

**An Exemplary Receiver**

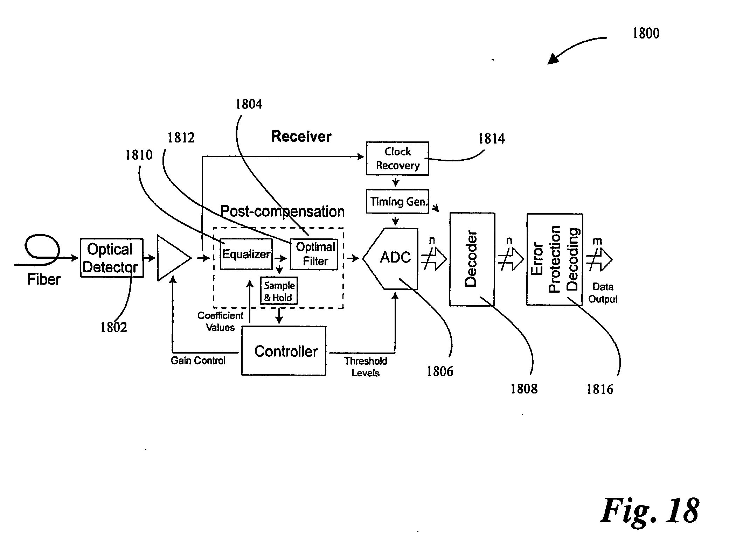

Figure 18 is a block diagram depicting a multilevel ASK optical receiver **1800** that is an exemplary embodiment of the present invention. The receiver **1800** typically comprises an optical detector **1802**, distortion post-compensation circuits **1804**, an Analog to Digital Converter (ADC) **1806**, an $n$-channel decoder **1808**, and an error protection decoding (EPD) module **1816**. The combination of the distortion post-compensation circuits **1804**, an Analog to Digital Converter (ADC) **1806**, an $n$-channel decoder **1808**, and an error protection decoding (EPD) module **1816** may be referred to as a desymbolizer. The electronics of receiver **1800** are termed the "desymbolizer", because they convert the received symbols back into one or more binary output data streams. The optical detector **1802** converts a $2^n$-level optical signal into a $2^n$-level electrical signal, which is then processed by post-compensation circuitry **1804.** The post-compensation circuitry **1804** comprises an adaptive equalization means **1810** as well as an optimal detection filtering means **1812**. The output of the compensator **1804** is input to an ADC **1806**, which converts the $2^n$-level signal into $n$ digital data streams. The ADC **1806** can employ a novel statistical automatic threshold determination means, which will allow for compensation of some of the link nonlinearities. These $n$ channels are input to a decoder **1808**, which converts a coded $n$-bit word each clock cycle into the corresponding $n$-bit word that was initially input to the transmitter encoder shown in Figure 5 and 6. The original data input to the transmitter is then obtained from the EPD **1816** by decoding the error protected data using the redundant bits introduced by the transmitter's EPC **510** (Figure 5) to correct errors in the received data. A clock recovery circuit **1814** can be used to generate the necessary timing signal to operate the ADC **1806** as well as output synchronization. In an exemplary embodiment of the multilevel receiver **1800,** a 16-level amplitude-modulated signal can be detected by the photodetector **1802** and ultimately converted to four digital data streams in order to realize a four times improvement in bandwidth of the transmission system. Analog-to-digital conversion and Q-Gray code-based decoding for a 16-level signal are summarized in Table 3. All of these functional blocks, less the optical detector **1802**, can be integrated in one circuit or on multi-chip module

**Table 3**. ADC output and Q-Gray decoding

| Level Input to ADC | Four-Bit Word Input to Q-Gray Decoder | Four-Bit Word Output from Q-Gray Decoder |
|---|---|---|
| 15 | 1111 | 1000 |
| 14 | 1110 | 1010 |
| 13 | 1101 | 1110 |
| 12 | 1100 | 1100 |
| 11 | 1011 | 0100 |
| 10 | 1010 | 0101 |
| 9 | 1001 | 1101 |
| 8 | 1000 | 1001 |
| 7 | 0111 | 1011 |
| 6 | 0110 | 1111 |
| 5 | 0101 | 0111 |
| 4 | 0100 | 0110 |
| 3 | 0011 | 0010 |
| 2 | 0010 | 0011 |
| 1 | 0001 | 0001 |
| 0 | 0000 | 0000 |

The optical detector **1802** and following trans-impedance amplifier (TIA) should exhibit good linearity over the entire receiver dynamic range. Fortunately, a conventional PIN detector in conjunction with an analog TIA offers good linearity over wide signal ranges. Additionally, the adaptive thresholding discussed below as well as the pre-distortion discussed above will compensate for system nonlinearities. The TIA is assumed to have a gain control, which will be used to produce a signal output of fixed amplitude.

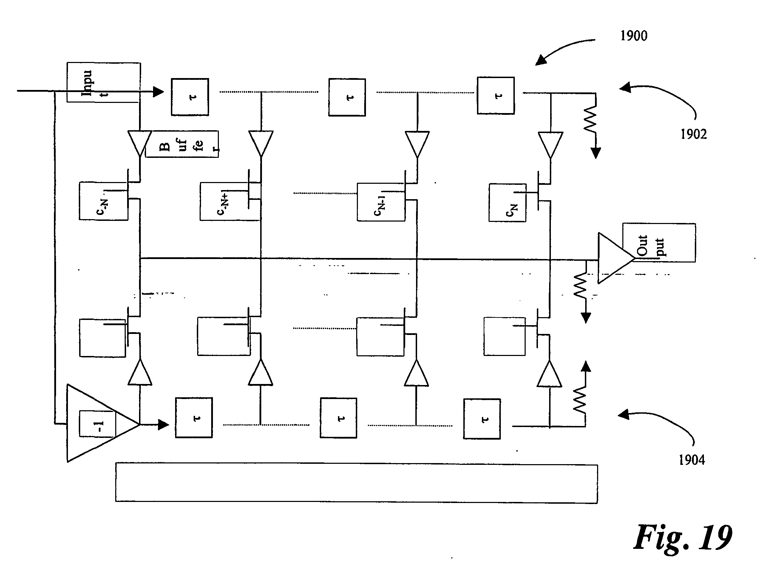

Figure 19 is a block diagram depicting an exemplary embodiment of a transversal filter **1900**. This circuit **1900** forms a classical transversal filter or equivalently a finite impulse response filter (FIR) filter, which can synthesize an arbitrary frequency response based on the tap gains/coefficients. Here, equalizer tap gains can be determined by the output conductance of FETs. Controlling both the size of FET and the gate bias voltages sets the output conductances. These control FETs are appropriately scaled to minimally impact the input signal propagating down the delay transmission line(s). The input is assumed to either be differential or single-ended with the circuit generating an inverted form of the input as shown in Figure 19. This is required to allow for the filter coefficient to be either positive or negative depending on which FET is activated ($c_i^-$ or $c_i^+$).

In this circuit **1900**, an input signal is divided into two parts. One part propagates down the upper cascade of delay-lines of equal delay 1902; whereas the other part is inverted and propagated down the lower cascade of delay lines **1904.** Alternately, a differential signal can be applied to the upper **1902** and lower **1904** delay line cascades without the need for a signal inverting means. The two transmission line cascades can provide a means for supporting both positive and negative gain coefficients. From each junction of the delay-lines a high-input impedance amplifier (e.g., **1906**) is used to sample the signal without significantly distorting the signal propagating down the delay-line cascade. From each of these buffers is a FET (e.g., **1908**) (drain or source connected), which is used as a variable resistor means. The other terminal (source or drain) of these variable resistance FET's is connected to a common node **1910** at which point signal summation occurs. From this node is a resistor **1912** that is of sufficiently low impedance to mitigate coefficient interdependence, which would be caused by the varying impedance of this summation node as various taps are controlled. The resulting summation is then amplified and output.

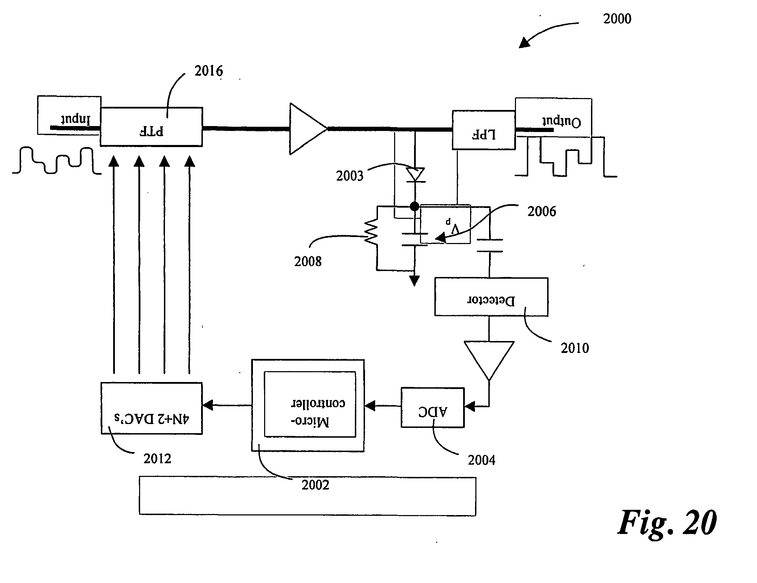

Figure 20 is a block diagram depicting an adaptive transversal filter 2000 for the multi-level optical transmission system that is an exemplary embodiment of the present invention. In this embodiment, the spectral amplitude of the received symbol is adjusted based on equalizer tap gains which are calculated in the microcontroller **2002** in order to remove the effect of intersymbol interference.

The peak voltage of the received signal, $V_p$ is detected by a diode **2003**, capacitor **2006**, and resistor **2008**. Ideally, with a frequency independent (equalized) channel, the peak voltage would be constant over time. If the optical channel is not equalized, the measured peak voltage will vary with time. This occurs due to the time dependent frequency content of a random data stream. Thus, the sampled peak voltage is measured and fed into the microcontroller **2002** through the ADC **2004**. The job of the microcontroller **2002** is to appropriately select the gain coefficients of the PTF to make the measured peak voltage constant in addition to removing ISI which corrupts the other signal levels in the same manner as the peak. Since there may be no knowledge of the frequency content of the random data at any given time, the measured peak voltage fluctuation can only give a measure of goodness and not direct knowledge of appropriate PTF settings. Therefore, the microcontroller **2002** must perform a multidimensional optimization (4N+2 variables) to minimize a single scalar quantity. Fortunately, those skilled in the art will realize that many numerical techniques can be brought to bear to solve this problem (e.g., minimum mean-squared error method, gradient methods, bisection, genetic algorithm, etc.). One of the numerical techniques is employed and the microcontroller **2002** repeats this procedure to determine the appropriate equalizer tap gains (weights).

The sampling rate must be adjusted appropriately to the received data stream's random properties. Typically one would sample the data sufficiently fast that the frequency content of the signal (and especially the ISI) is observed. However, the practical maximum sampling rate is limited by the cost of such a high-speed ADC. Nonetheless, one may still observe the effects of ISI through the peak stability or the "wellness" of the measured histogram as described later. Consequently, such a measure of goodness (based on slowly sampled data) may be used in an optimization algorithm to determine the filter coefficients. Effective sample rates of 1/10th to 1/100th the high-speed data rate should be sufficient in the proposed approach For example, at 10 Gsym/s data rates, a 10 ns sampling time appears appropriate (1/100th of the 0.1 ns bit period). This sampling speed (100 Msps) is readily available using current technology. A preferred embodiment would AC couple the output of the detector circuit **2010** and peak detect the fluctuation amplitude. Then, the microcontroller **2002** can sample the fluctuation level on demand at a rate commensurate with the control algorithm (< 1 Msps) and optimize the filter coefficients.

The output of the microprocessor's **2002** optimization algorithm is fed into DACs **2012** to control the equalizer tap gains by varying the gate voltages of FETs. Equalization filters are known to commonly amplify high-frequency noise. To address this issue, a low pass filter (LPF) **2014** is placed after the equalization filter.

In the embodiment shown in Figure 20, a high-speed multilevel data stream can be routed through the circuit **2000** on the signal path shown in bold. The high-speed data stream first passes through the programmable transversal filter (PTF) **2016**, which frequency equalizes the signal. The high-speed signal can then be amplified as appropriate and low pass filtered (LPF) to minimize that typical noise amplification caused by the PTF **2216**. The high-speed data stream is monitored after the PTF **2016** by a simple peak detector circuit comprised of a diode **2003**, resistor **2008** and capacitor **2006**. The output of the peak detector circuit is appropriately signal conditioned by removing the DC component and again power detected (envelope, Root-Mean-Square (RMS), or other means is sufficient), filtered, amplified and fed to the ADC **2004** of a microcontroller **2002**. The microcontroller **2002** samples the ADC and by an iterative algorithm based on the fluctuations of the envelope of the high-speed signal determines the best settings of 4N+2 DACs **2012**, which control the 4N+2 coefficients of the PTF **2016**. This allows for the automatic equalization of a high-speed multilevel communication data stream in a means, which does not interrupt the data flow.

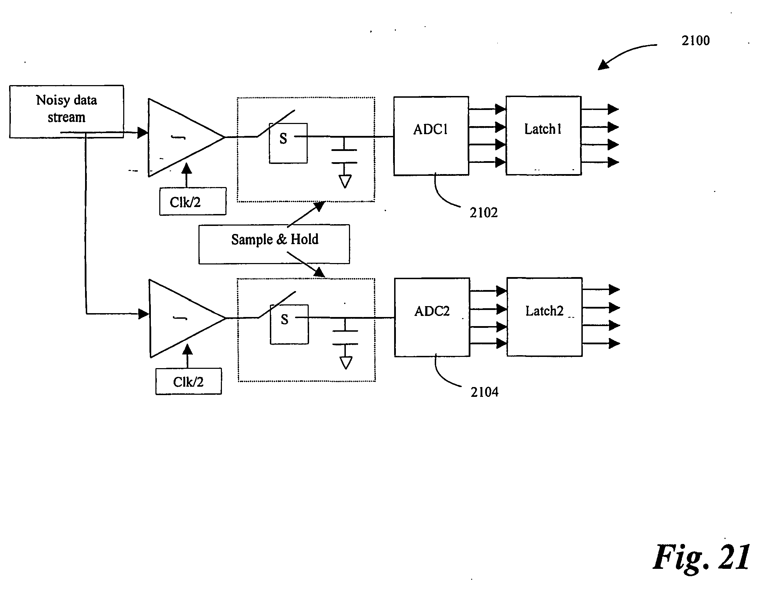

Figure 21 is a block diagram depicting an exemplary optimal filtering circuit **2100**, which can be used at very high data rates. This circuit **2100** uses a novel method for parallel noise filtering and detection implementation using integrate and dump filters (IDFs). IDFs form the optimal correlation detection for simple rectangular data symbols (correlates a rectangle with a rectangle). At high data rates, it is normally difficult to realize IDFs that can "dump" fast enough to correlate the next symbol. The approach described here overcomes this limitation by parallel processing the received data. This approach also provides the additional feature of allowing for serial to parallel data conversion without requiring an additional demultiplexer circuit in the receiver resulting in receiver simplification. Additionally, this approach reduces the speed requirement of the ADCs **2102**, **2104** as each converter samples at a rate reduced by the number of IDF circuits. The approach can be extended to higher orders of parallelism (N channels) depending on the level of demultiplexing desired as well as the speed restrictions of available ADC circuits.

The received signal from the equalization filter or receiver is split and fed into the two IDFs. The dump filters consists of an integrator (i.e. RC circuit) and switch (i.e. transistor). The number of dump filters employed may vary depending on the data rate and the limitations of component performance. A clock is used for the dumping pulse of the integrator and will be extracted from the received signal using a clock recovery circuit followed by a divide-by-two frequency divider. A clock recovery circuit can be implemented using edge detectors with phase-locked loops or bandpass filters and comparators. With two IDFs, the recovered ½ clock and inverted ½ clock signals are adequate to operate the IDFs switches as well as the sample-and-hold (SH) circuits or track-and-hold circuits, which hold the result of the IDFs at the end of the symbol period for thresholding by the analog-to-digital converters. The data stream is integrated during alternate symbol periods (clock/2) in the IDF filters. This allows for parallel operation resulting in the demultiplexing of the data stream into even and odd symbol data streams. Then, the even and odd data streams can be sampled and multilevel thresholded by the SH and ADC. The resulting binary signals can be sent to latches to temporally align the results from the two parallel channels. The result is the thresholded output of two symbols once every two-symbol periods. The specific clock pulses used are not shown in Figure 21 due to the hardware specific nature of the ADC and SH circuits. In general terms, after the end of a given symbol period, the active IDF filter is sampled by the corresponding SH and the corresponding ADC is initiated. Simultaneously, the other IDF filter is made active and begins to perform the correlation of the input signal. This process is continued with each channel (signal path comprised of an IDF, SH and ADC) processing alternate symbols.

Table 4 shows the sequence of events during several symbol periods. The "*" represents the SH sample point. Note that the latched outputs are both valid over any given symbol period.

**Table 4**. Timing diagram for a two-channel receiver around the reception of the ith bit.

| | Symbol Period | | | |
|---|---|---|---|---|
| **Circuit** | i - 1 | i | i + 1 | i + 2 |
| IDF 1 | Dump | Active | Dump | Active |
| SH 1 | Hold i-2 | * | Hold i | * |
| ADC 1 | Convert i-2 | | Convert i | |
| Latch 1 | Valid i-4 | Valid i-2 | | Valid i |
| IF2 | Active | Dump | Active | Dump |
| SH2 | * | Hold i-1 | * | Hold I+1 |
| ADC 2 | | Convert i-1 | | Convert i+1 |
| Latch 2 | Valid i-3 | | Valid i-1 | |

This approach can be extended to an arbitrary number of channels allowing for additional speed-performance reduction of the components in each channel as well as for higher levels of demultiplexing.

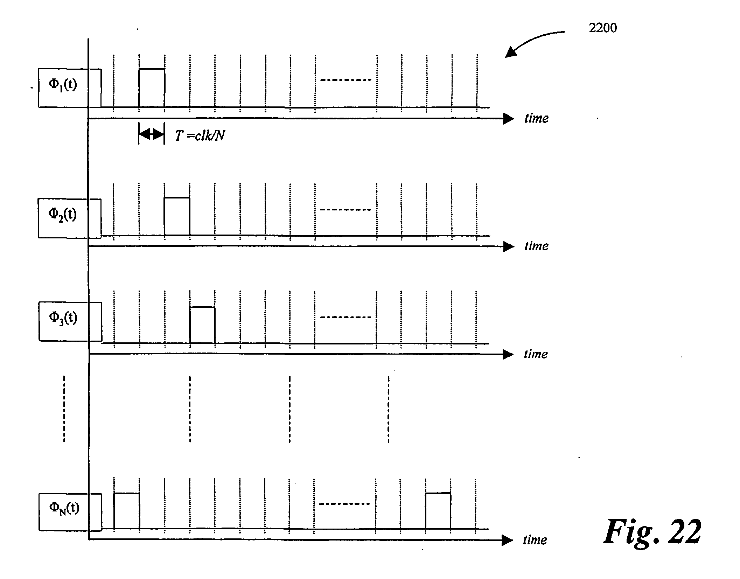

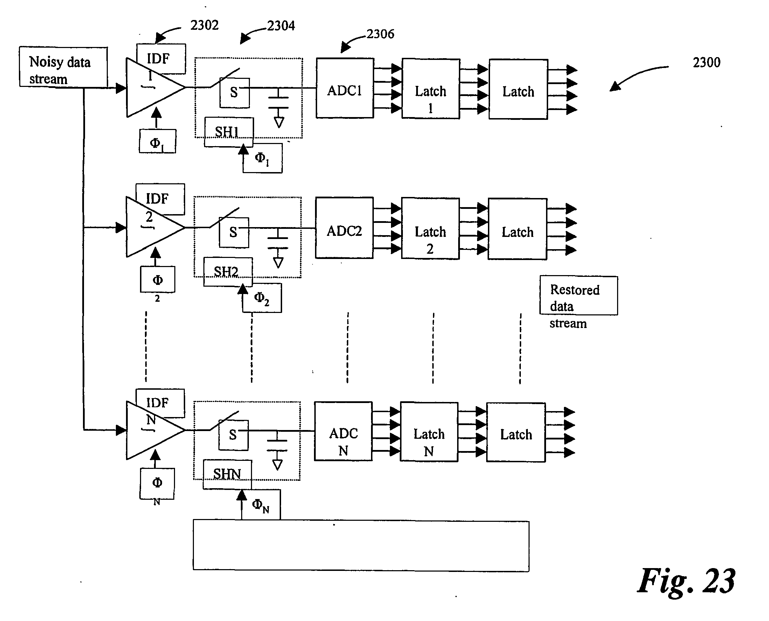

Figure 23 is a block diagram depicting an exemplary N-channel filter **2300**. Additional channels will require correspondingly increased complexity clock generation as illustrated in Figure 22. A multiphase clock must be used to properly sequence through operation of the multiple IDF, SH, and ADC functions.

Generally, the *N*-channel filter **2300** operates by sequentially activating the IDF circuits **2302** for one symbol period each. At the end of the symbol time, the SH (e.g., **2304**) (sample-and-hold or track-and-hold circuits) holds the result of the correlation function performed by the IDFs. The ADC is then triggered and performs the multi-level thresholding. When the ADC is complete (should be completed in less than *N* symbol times), the result is latched into the first set of latches. After all *N*-channels have valid results; the final *N* symbol-result is latched into the output latches. The final *N* symbol-results remain valid *for N* symbol time periods or equivalently until the next *N* symbols are processed. This system forms a pipelined detection approach, which significantly alleviates the speed requirements of the ADCs.

The Analog-to-Digital Converter (ADC) (e.g., **2306**) may be a conventional uniformly-leveled converter of adequate speed and resolution or the preferred embodiment described below. Since the ASK signal may be significantly distorted by the nonlinearities of the optical link, the received levels may no longer be uniformly spaced during detection at the receiver.

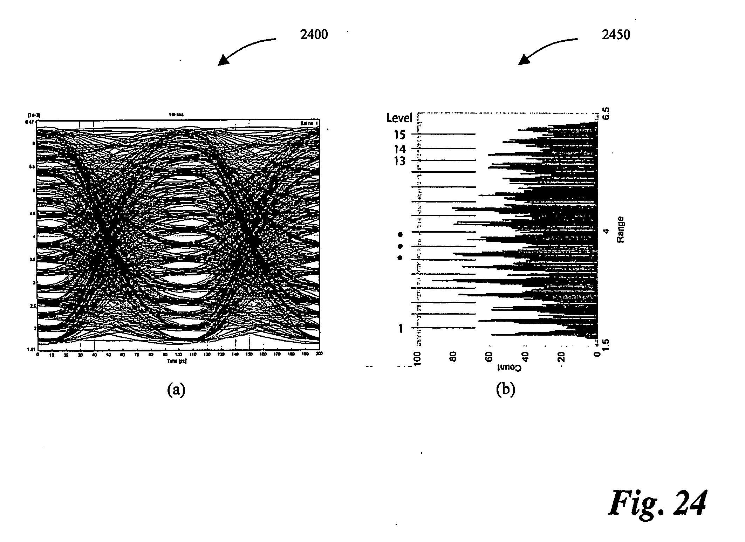

A simulated multi-level eye diagram of a 16-level signal transmitted through a hypothetical fiber link (10 Gb/s optical link sent through a 140 km fiber length with a single EDFA) is shown in Figure 24. This simulation illustrates the difficulty in determining the thresholds for multilevel data streams. From this simulation, it is apparent that the eyes are non-uniform in noise and level after generation, transmission, and detection in an optical system. It is desired to have voltage detection thresholds centered in the statistical center of each of the 15 "eyes". Since the eyes are no longer uniformly distributed in voltage, a simple conventional direct ADC at the minimum number of bits ($\log_2(16) = 4$ in this case) is no longer possible. Hypothetically, the received voltage signal could be digitized at a higher resolution (additional bits) and signal processing applied to determine the correct level. Unfortunately, at the targeted symbol rates of many optical systems (i.e. OC-192 at 10 Gb/s) this would require order-of-magnitude speed improvements of readily available ADC and signal processing technologies.

For this exemplary embodiment, the received analog signal is sampled at random points in time and a histogram of the measured voltages is formed as illustrated in Figure 24. This histogram is comprised of a finite number of the most recent "n" samples. As a new sample is determined, the oldest is removed from the sample set. A simple computer search algorithm can then be used to track the center of the eyes for the statistically optimized threshold/decision point for the receiver decision circuit(s).

These temporally random samples must be performed at a voltage resolution in excess of the number of levels used in the high-speed data transmission. In particular, in order to determine the location of the peaks and valleys of the resulting histogram, the Nyquist theorem dictates that the sample resolution be as a minimum twice that of the number of data levels in the high speed data stream (i.e. 5 bits for 16 levels). In practice, ADC technology is readily available to allow for significant voltage resolution over-sampling (say 14 bits).

Ideally samples would occur at times centered temporally in the high-speed data stream's eyes. This would require critical timing requirements and therefore not be expected to be cost effective. Instead, the voltage samples can be easily made at random times thereby allowing for the elimination of all critical timing circuitry. The result of random signal voltage sample times is similar to the ideal sampling case due to the larger probability of sampling during a signal transition. This results in a data "floor" in the histogram, which can be easily removed during subsequent signal processing. Random sampling for this application means random to the high-speed data rate. This can be achieved by using a periodic sample rate, which is not harmonically related to the high-speed data rate. The actual average sample rate of the random voltage samples is dictated by the threshold update speed desired. If the communication channel is expected to vary quickly with time, the sample rate must be correspondingly high. As an example, assuming that the channel varies with a 10 ms characteristic time and 1000 samples forms the histogram; average conversion speed only need be 100,000 samples per second.

This approach can additionally provide information of the "wellness" of the received signal. For example, the ratio of the number of samples within the eyes to the peaks between the eyes will relate directly to error rate. Additionally, these types of ratios along with measured signal levels would provide very useful information to select the operating point of programmable analog signal processing modules prior to this process. For example, the tap weighting coefficients of a programmable delay line equalization filter could be adjusted for maximum data "eye-opening". Advantageously, this approach can be applied to the optimal detection of multi-level signals of any number of levels (2 to infinity).

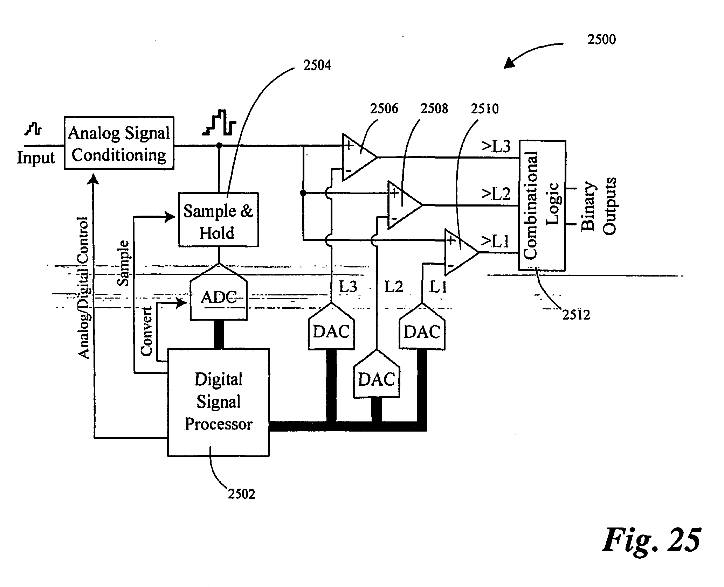

Figure 25 is a block diagram depicting an exemplary multi-level receiver 2500. The diagram is shown for a 4-level receiver, but it should be obvious to one skilled in the art that this circuit can be readily extended to any number of levels. For 4-levels ($2^n$=4), there is necessarily 3 (i.e., $2^n$ - 1) voltage decision levels. These levels are determined by the Digital Signal Processor (DSP) **2502** based on the sampled voltage levels.

Specifically, the DSP **2502** would sample the received analog voltage by triggering the sample-and-hold circuit **2504** or equivalently a track-and-hold circuit at some time random in relation to the received data stream. The sample/track-and-hold circuits **2504** will necessarily have a capture bandwidth commensurate with the high-speed data stream, but will only need to be able to sample at rate much lower than that of the high-speed data stream. The DSP **2502** would then trigger the ADC conversion and record the resulting voltage. The DSP **2502** would continue this process until adequate statistic information can be gathered to determine the appropriate decision levels. Typical time sample set sizes are expected to be on the order of 100 to 1000, though larger or smaller sample sizes can also be selected. The actual sample size should be adequate to determine the resulting Gaussian probability peaks with adequate accuracy to sufficiently determine the eye centers. When a new sample is recorded, the oldest will be rejected from the sample set. The statistical analysis will be continually performed; thereby adjusting the decision levels in real time to compensate for time varying distortion/noise of the received signal. Additionally, the "wellness" of the data may also be used to feedback control signals to analog signal conditioning circuits to provide an improved eye opening for reduced error rate.

These voltage decision levels are then used by three high-speed comparators **2506-2510**, which are followed by combinational logic **2512** to properly decode the levels back to the encoded data streams. The three comparators **2506-2510** and combinational logic **2512** are closely related to a traditional flash ADC with the exception of optimal threshold control (as per present invention) and decoding methods more amenable to communication systems than binary. The receiver converts the multi-level input into properly decoded data streams. It should be obvious to one skilled in the art that this circuit can be expanded to n-level transmissions by incorporating n-1 high-speed comparators, a more complex decoding logic, and a higher resolution low-speed ADC for statistic signal sampling.

One skilled in the art will understand that various combinational logic circuits can be designed to perform the decoding function block **2712**. As illustrated by Table 5, adjacent levels output by an ADC effect a change of only one bit in the decoded four-bit words. These types of decoding techniques are well known to those skilled in the arts. A discussion of these techniques is given in "Digital and Analog Communications" by Gibson, published by Macmillan Publishing Company in 1993.

Although the present invention has been described in connection with various exemplary embodiments, those of ordinary skill in the art will understand that many modifications can be made thereto within the scope of the claims that follow. Accordingly, it is not intended that the scope of the invention in any way be limited by the above description, but instead be determined entirely by reference to the claims that follow.

**Claims**

1. A method for increasing the channel data rate throughput in an optical fiber communication system while minimizing a bit error rate, the method comprising the steps of:

receiving one or more digital input signals comprising m input data streams, each input data stream comprising a series of input pulses, each input pulse having one of two pulse levels;

creating an m-bit digital input word having m bits that comprises a bit from each of the m input data streams and mapping the m-bit digital input word into an error resistant digital input word having n bits, wherein $n \geq m$;

converting each error resistant digital input word to a corresponding output symbol representing one of $2^n$ distinct values;

generating an output signal comprising a series of output symbols; and

modifying a first output symbol, according to a signal property of a preceding output symbol and a signal property of a succeeding output symbol.

2. The method of claim 1, wherein the step of modifying the first output symbol comprises accessing a look-up table to determine an appropriate modification of a signal property of the first output symbol.

3. The method of claim 1, wherein the step of modifying the first output symbol is performed by a precompensation circuit.

4. The method of claim 1, wherein the digital input signal is received from *m* separate channels, the output signal having *n* times higher data rate than that of one of the *m* separate channels.

5. The method of claim 1, wherein the digital input signal is received from a single channel.

6. The method of claim 1, wherein the spectral occupancy of the optical signal is minimized.

7. The method of claim 1, wherein the signal property of the preceding output symbol is a first amplitude and the signal property of the succeeding output symbol is a second amplitude and further comprising the step of interrogating the output signal to determine an amplitude of the first output symbol.

8. The method of claim 7, further comprising the step of interrogating the output signal to determine the amplitude of the preceding output symbol.

9. The method of claim 7, further comprising the step of interrogating the output signal to determine the amplitude of the succeeding output symbol.

10. The method of claim 7, wherein the first output symbol is delayed to determine the amplitude of the succeeding output symbol.

11. The method of claim 10, wherein a transmission line is used to delay the first output symbol for a first delay time.

12. The method of claim 10, wherein a digital register is used to store the first output symbol, thereby delaying the first output symbol for a first delay time.

13. The method of claim 7, wherein the preceding output symbol is delayed to determine the amplitude of the first output symbol.

14. The method of claim 13, wherein a transmission line is used to delay the preceding output symbol for a second delay time.

15. The method of claim 13, wherein a digital register is used to store the first output symbol, thereby delaying the first output symbol for a first delay time.

16. The method of claim 1, wherein the step of modifying the first output symbol comprises modifying an amplitude of the first output symbol.

17. The method of claim 16, wherein the step of modifying the amplitude of the first output symbol comprises modifying the amplitude of the first output symbol based on the amplitude of the first output symbol.

18. The method of claim 16, wherein the step of modifying the amplitude of the first output symbol comprises modifying the amplitude of the first output symbol based on the amplitude of the preceding output symbol.

19. The method of claim 16, wherein the step of modifying the amplitude of the first output symbol comprises modifying the amplitude of the first output symbol based on the amplitude of the succeeding output symbol.

20. The method of claim 16, wherein the step of modifying the amplitude of the first output symbol comprises modifying the amplitude of the first output symbol based on the phase of the first output symbol.

21. The method of claim 16, wherein the step of modifying the amplitude of the first output symbol comprises modifying the amplitude of the first output symbol based on the phase of the preceding output symbol.

22. The method of claim 16, wherein the step of modifying the amplitude of the first output symbol comprises modifying the amplitude of the first output symbol based on the amplitude of the succeeding output symbol.

23. The method of claim 1, further comprising the step of further modifying the first output symbol, according to an amplitude of a second preceding output symbol and a second succeeding output symbol.

24. The method of claim 1, wherein the signal property of the preceding output symbol is a first frequency, the signal property of the succeeding output symbol is a third frequency and the signal property of the succeeding output symbol is a second frequency and further comprising the step of interrogating the output signal to determine a frequency of the first output symbol.

25. The method of claim 24, wherein the step of modifying the first output symbol comprises modifying the frequency of the first output symbol.

26. The method of claim 25, wherein the step of modifying the frequency of the first output symbol comprises modifying the frequency of the first output symbol based on the frequency of the preceding output symbol.

27. The method of claim 22, wherein the step of modifying the frequency of the first output symbol comprises modifying the frequency of the first output symbol based on the frequency of the succeeding output symbol.

28. The method of claim 22, wherein the step of modifying the frequency of the first output symbol comprises modifying the frequency of the first output symbol based on the frequency of the first output symbol.

29. The method of claim 1, wherein the signal property of the preceding output symbol is a first phase and the signal property of the succeeding output symbol is a second phase and further comprising the step of interrogating the output signal to determine a phase of the first output symbol.

30. The method of claim 29, wherein the step of modifying the first output symbol comprises modifying a phase of the first output symbol.

31. The method of claim 30, wherein the step of modifying the phase of the first output symbol comprises modifying the phase of the first output symbol based on the phase of the first output symbol.

32. The method of claim 30, wherein the step of modifying the phase of the first output symbol comprises modifying the phase of the first output symbol based on the phase of the succeeding output symbol.

33. The method of claim 30, wherein the step of modifying the phase of the first output symbol comprises modifying the phase of the first output symbol based on the phase of the preceding output symbol.

34. The method of claim 30, further comprising the step of further modifying the first output symbol, according to a phase of a second preceding output symbol and a phase of second succeeding output symbol.

35. The method of claim 30, wherein the step of modifying the phase of the first output symbol depends upon the amplitude of the preceding output symbol.

36. The method of claim 30, wherein the step of modifying the phase of the first output symbol depends upon the amplitude of the succeeding output symbol.

37. The method of claim 30, wherein the step of modifying the phase of the first output symbol depends upon the amplitude of the first output symbol.

38. A method for increasing the channel data rate throughput in an optical fiber communication system while minimizing a bit error rate, the method comprising the steps of:

receiving a digital input signal comprising m input data streams, each input data stream comprising a series of input pulses, each input pulse having one of two pulse levels;
creating an m-bit digital input word having $m$ bits that comprises a bit from each of the m input data streams and mapping the m-bit digital input word into a first error resistant digital input word having n bits, wherein n $\geq$ m;
converting the first error resistant digital input word to a second error resistant digital input word using an error resistant code;
converting each second error resistant digital input word to a corresponding error resistant output symbol having one of $2^n$ distinct values;
generating an output signal comprising a series of error resistant output symbols; and
transmitting each error resistant output symbol to a receiver over a fiber optic link.

39. The method of claim 38, wherein the digital input signal is received from $m$ separate channels, the output signal having $n$ times higher data rate than that of one of the $m$ separate channels.

40. The method of claim 38, wherein the digital input signal is received from a single channel.

41. The method of claim 38, wherein the error resistant output symbol is convolutionally coded.

42. The method of claim 38, wherein the error resistant output symbol is encoded with block coding.

43. The method of claim 38, wherein the error resistant output symbol is encoded with trellis coding.

44. The method of claim 38, wherein the error resistant code is a Gray code.

45. The method of claim 44, wherein the Gray code is **characterized by** having adjacent words that are differentiated from each other by a change in only one bit.

46. The method of claim 38, wherein the error resistant code is a Q-Gray code.

47. The method of claim 46, wherein the Q-Gray code is **characterized by** having adjacent words that are differentiated from each other by a change in only one bit.

48. A method for increasing the channel data rate throughput in an optical fiber communication system while minimizing a bit error rate, the method comprising the steps of:

receiving a digital input signal comprising m input data streams, each input data stream comprising a series of input pulses, each input pulse having one of two pulse levels;
creating an m-bit digital input word having $m$ bits that comprises a bit from each of the m input data streams and mapping the m-bit digital input word into an error resistant digital input word having n bits, wherein n $\geq$ m;
converting each error resistant digital input word to a corresponding output symbol having one of $2^n$ distinct values;
generating an output signal comprising a series of output symbols;
adding a signal dependent bias to the output signal so that a linear response is generated in an optical source; and
using the optical source to transmit the output signal.

49. The method of claim 48, wherein the digital input signal is received from m separate channels, the output signal having n times higher data rate than that of one of the m separate channels.

50. The method of claim 48, wherein the digital input signal is received from a single channel.

51. The method of claim 48, wherein error correction coding is applied to the input data.

52. The method of claim 48, wherein a drive current controls the optical source.

53. The method of claim 48, wherein the step of adding a signal dependent bias comprises changing the drive current associated with the output signal by an error current.

54. The method of claim 52, wherein the drive current controls a laser diode.

55. The method of claim 54, wherein a nonlinear element is used to shunt an error current from the drive current.

56. The method of claim 55, wherein the laser diode is a nonlinear optical modulator device.

57. The method of claim 48, wherein a drive voltage controls the optical source.

58. The method of claim 57, wherein a series resistor is used to convert a nonlinear shunt current into a nonlinear voltage drop to reduce the drive voltage.

59. The method of claim 57, wherein the step of adding a signal dependent bias comprises adjusting the drive voltage associated with the output signal by an error voltage.

60. The method of claim 52, wherein the drive controls a Mach-Zehnder modulator.

61. The method of claim 60, wherein a series resistor is used to convert a nonlinear shunt current into a nonlinear voltage drop to reduce the drive voltage.

62. An optical transmitter (202) for generating an optical fiber communication signal for transmission over an optical fiber (204) while minimizing a bit error rate, the optical transmitter comprising:

a symbolizer (510, 502, 504, 506, 512) for receiving an input data signal comprising m input data streams, each input data stream comprising a series of pulses, each pulse having one of two distinct pulse levels, wherein the symbolizer is operative to create a first error resistant m-bit digital input word comprising a bit from each of the m input data streams and to map the m-bit digital input word into a first error resistant n-bit digital input word having n bits, wherein $n \geq m$, and further operative to convert the first error resistant digital input word to a second error resistant digital input word, and to convert each second error resistant digital input word to a corresponding error resistant output symbol having one of $2^n$ distinct values using an error resistant code; and an optical source (508) for transmitting an output signal comprising at least one error resistant output symbol over the optical fiber, each error resistant output symbol corresponding to one of $2^n$ optical source intensity levels.

63. The optical transmitter of claim 62, wherein the input data signal is received from m separate channels, wherein the output signal comprises n-times higher data rate than the m separate channels.

64. The optical transmitter of claim 62, wherein the input data signal is received from a single channel.

65. The optical transmitter of claim 62, wherein the error resistant output symbol is convolutionally coded.

66. The optical transmitter of claim 62, wherein the error resistant output symbol is encoded with trellis coding.

67. The optical transmitter of claim 62, wherein the error resistant output symbol is encoded with block coding.

68. The optical transmitter of claim 62, wherein the error resistant code is a Gray code.

69. The optical transmitter of claim 68, wherein the Gray code is **characterized by** having adjacent words that are differentiated from each other by a change in only one bit.

70. The optical transmitter of claim 62, wherein the error resistant code is a Q-Gray code.

71. The optical transmitter of claim 70, wherein the Q-Gray code is **characterized by** having adjacent words that are differentiated from each other by a change in only one bit.

72. A transmission (202, 204, 206) link for transmitting an optical fiber communication signal for transmission over an optical fiber (204) the optical transmission link comprising:

a symbolizer (510, 502, 504, 506, 512) for receiving an input data signal comprising m input data streams, each input data stream comprising a series of pulses, each pulse having one of two distinct pulse levels, wherein the symbolizer is operative to create a m-bit digital input word having m bits comprising a bit from each of the m input data streams and to map the m-bit digital input word into an error resistant digital input word having n bits, wherein $n \geq m$, and further operative to convert each error resistant digital input word to a corresponding output symbol representing one of $2^n$ distinct values, and to generate an output signal comprising a series of output symbols; and

an optical source (508) for transmitting an output signal comprising a series of the optical symbols over the optical fiber, each optical symbol having one of $2^n$ intensity levels; and

wherein the symbolizer is further operative to modify a signal property of each optical symbol, according to a signal property of a preceding optical symbol and a signal property of a succeeding optical symbol.

73. The transmission link of claim 72 wherein the input data signal is received from m separate channels, wherein the output signal comprises n-times higher data rate than the m separate channels.

74. The transmission link of claim 72, wherein the digital input signal is received from a single channel.

75. The transmission link of claim 72, wherein the symbolizer further comprises a predistortion circuit.

76. The transmission link of claim 75, wherein the predistortion circuit is further operative to interrogate the output signal to determine the signal property of the first output symbol.

77. The transmission link of claim 75, wherein the predistortion circuit is further operative to interrogate the output signal to determine the signal property of the preceding output symbol.

78. The transmission link of claim 75, wherein the predistortion circuit is further operative to interrogate the output signal to determine the signal property of the succeeding output symbol.

79. The transmission link of claim 75, wherein the predistortion circuit performs the function of accessing a look-up table to determine an appropriate modification of the transmitted optical symbol.

80. The transmission link of claim 75, wherein the signal property of the first output symbol is an amplitude of the first output signal and the predistortion circuit is further operative to modify the first output symbol by modifying the amplitude of the first output symbol.

81. The transmission link of claim 80, wherein the predistortion circuit is further operative to modify the amplitude of the first output symbol based on the amplitude of the first output symbol.

82. The transmission link of claim 80, wherein the predistortion circuit is further operative to modify the amplitude of the first output symbol based on the amplitude of the succeeding output symbol.

83. The transmission link of claim 80, wherein the predistortion circuit is further operative to modify the amplitude of the first output symbol based on the amplitude of the preceding output symbol.

84. The transmission link of claim 75, wherein the signal property of the first output symbol is a phase of the first output signal and the predistortion circuit is further operative to modify the first output symbol by modifying the phase of the first output symbol.

85. The transmission link of claim 84, wherein the predistortion circuit is further operative to modify the phase of the first output symbol based on the phase of the first output symbol.

86. The transmission link of claim 84, wherein the predistortion circuit is further operative to modify the phase of the first output symbol based on the phase of the succeeding output symbol.

87. The transmission link of claim 84, wherein the predistortion circuit is further operative to modify the phase of the first output symbol based on the phase of the preceding output symbol.

88. The transmission link of claim 75, wherein the signal property of the first output symbol is a frequency of the first output signal and the predistortion circuit is further operative to modify the first output symbol by modifying the frequency of the first output symbol.

89. The transmission link of claim 88, wherein the predistortion circuit is further operative to modify the frequency of the first output symbol based on the frequency of the first output symbol.

90. The transmission link of claim 88, wherein the predistortion circuit is further operative to modify the frequency of the first output symbol based on the frequency of the preceding output symbol.

91. The transmission link of claim 88, wherein the predistortion circuit is further operative to modify the frequency of the first output symbol based on the frequency of the succeeding output symbol.

92. The transmission link of claim 72, further comprising a desymbolizer comprising a photodetector, a post-compensation circuit, and a decoder.

93. The transmission link of claim 92, wherein the desymbolizer is associated with a receiver functionally connected to the optical fiber, and wherein the desymbolizer is operative to decode the output signal into n output streams, each output stream having a data rate of $1/n$ of the output signal data rate.

94. An optical transmitter (202) for generating an optical fiber communication signal for transmission over an optical fiber (204), the optical transmitter comprising:

a symbolizer (510, 502, 504, 506, 512) or receiving an input data signal comprising m input data streams, each input data stream comprising a series of pulses, each pulse having one of two distinct pulse levels, wherein the symbolizer is operative to create a m-bit digital input word having $m$ bits comprising a bit from each of the m input data streams and to map the m-bit digital input word into an error resistant digital input word having n bits, wherein $n \geq m$, and further operative to convert each error resistant digital input word to a corresponding output symbol representing one of $2^n$ distinct values, and to generate an output signal comprising a series of output symbols; and

an optical source (508) for transmitting an output signal comprising at least one optical symbol over the optical fiber, each optical symbol represented by one of $2^n$ optical intensity levels; and
wherein the symbolizer further comprises a linearizer circuit (512) operative to introduce a corrective offset into the output signal to counteract a nonlinear response associated with the optical source.

95. The optical transmitter of claim 94, wherein the input data signal is received from m separate channels, wherein the output signal comprises $n$-times higher data rate than the $m$ separate channels.

96. The optical transmitter of claim 94, wherein the input data signal is received from a single channel.

97. The optical transmitter of claim 94, wherein a drive current controls the optical source.

98. The optical transmitter of claim 94, wherein the linearizer circuit is further operative to reduce the drive current associated with the output signal by an error current.

99. The optical transmitter of claim 94, wherein the linearizer circuit comprises a nonlinear element operative to shunt the error current from the drive current.

100. The optical transmitter of claim 94, wherein the corrective offset comprises a reduction in the drive voltage associated with the output signal by an error voltage.

101. A method for increasing the data throughput of an existing optical fiber communications system without replacing an optical fiber plant associated with the existing optical fiber communications system, the method comprising the steps of:

replacing an existing transmitter with an upgrade transmitter having a symbolizer for receiving an input data signal comprising an input data streams, each input data stream comprising a series of pulses, each pulse having one of two distinct pulse levels, wherein the symbolizer is operative to create a m-bit digital input word having m bits comprising a bit from each of the m input data streams and to map the m-bit digital input word into an error resistant digital input word having n bits, wherein n ≥ m, and further operative to convert each error resistant digital input word to a corresponding output symbol representing one of $2^n$ distinct values, and to generate an output signal comprising a series of output symbols; and

replacing an existing receiver with an upgrade receiver having a desymbolizer operative to receive and decode an output signal generated by the upgrade transmitter, the output signal comprising a series of output symbols.

102. The method claim of 101, wherein the symbolizer is further operative to convert each output symbol to the n-bit error protected symbol using error protection coding, and wherein the transmitted output signal comprises n-times higher data rate than a data rate associated with each of the separate input data signals.

**Patentansprüche**

1. Verfahren zum Erhöhen des Kanaldatenraten-Durchsatzes in einem Lichtleitfaser-Kommunikationssystem bei Minimierung einer Fehlerbitrate, wobei das Verfahren folgende Schritte umfasst:

Empfangen wenigstens eines digitalen Eingangssignals, das m Eingangsdatenströme enthält, wobei jeder Eingangsdatenstrom eine Abfolge von Eingangsimpulsen enthält und jeder Eingangsimpuls einen von zwei Impulspegeln hat;

Erzeugen eines digitalen m-Bit-Eingangswortes, das *m* Bits hat und ein Bit aus jedem der m Eingangsdatenströme enthält, und Abbilden des digitalen m-Bit-Eingangswortes in ein fehlerbeständiges digitales Eingangswort, das n Bits hat, wobei n ≥ m;

Umwandeln jedes fehlerbständigen digitalen Eingangswortes in ein entsprechendes Ausgangssymbol, das einen von $2^n$ eindeutigen Werten repräsentiert;

Erzeugen eines Ausgangssignals, das eine Abfolge von Ausgangssymbolen enthält; und

Abändern eines ersten Ausgangssymbols gemäß einer Signaleigenschaft eines vorangehenden Ausgangssymbols und einer Signaleigenschaft eines nachfolgenden Ausgangssymbols.

2. Verfahren nach Anspruch 1, bei dem der Schritt des Abänderns des ersten Ausgangssymbols das Zugreifen auf eine Suchtabelle umfasst, um eine geeignete Abänderung einer Signaleigenschaft des ersten Ausgangssymbols zu bestimmen.

3. Verfahren nach Anspruch 1, bei dem der Schritt des Abänderns des ersten Ausgangssymbols durch einen Vorkompensationsschaltkreis ausgeführt wird.

4. Verfahren nach Anspruch 1, bei dem das digitale Eingangssignal über *m* separate Kanäle empfangen wird, wobei das Ausgangssignal eine *n*-fach höhere Datenrate hat als jene eines der *m* separaten Kanäle.

5. Verfahren nach Anspruch 1, bei dem das digitale Eingangssignal über einen einzigen Kanal empfangen wird.

6. Verfahren nach Anspruch 1, bei dem die spektrale Okkupanz des optischen Signals minimiert wird.

7. Verfahren nach Anspruch 1, bei dem die Signaleigenschaft des vorausgehenden Ausgangssymbols eine erste Amplitude ist und die Signaleigenschaft des nachfolgenden Ausgangssymbols eine zweite Amplitude ist, und weiterhin umfassend den Schritt des Abfragens des Ausgangssignals, um eine Amplitude des ersten Ausgangssymbols zu bestimmen.

8. Verfahren nach Anspruch 7, weiterhin umfassend den Schritt des Abfragens des Ausgangssignals, um die Amplitude des vorangehenden Ausgangssymbols zu bestimmen.

9. Verfahren nach Anspruch 7, weiterhin umfassend den Schritt des Abfragens des Ausgangssignals, um die Amplitude des nachfolgenden Ausgangssymbols zu bestimmen.

10. Verfahren nach Anspruch 7, bei dem das erste Ausgangssymbol verzögert wird, um die Amplitude des nachfolgenden Ausgangssymbols zu bestimmen.

11. Verfahren nach Anspruch 10, bei dem eine Sendeleitung verwendet wird, um das erste Ausgangssymbol für eine erste Verzögerungszeit zu verzögern.

12. Verfahren nach Anspruch 10, bei dem ein digitales Register verwendet wird, um das erste Ausgangssymbol zu speichern, wodurch das erste Ausgangssymbol für eine erste Verzögerungszeit verzögert wird.

13. Verfahren nach Anspruch 7, bei dem das vorangehende Ausgangssymbol verzögert wird, um die Amplitude des ersten Ausgangssymbols zu bestimmen.

14. Verfahren nach Anspruch 13, bei dem eine Sendeleitung verwendet wird, um das vorangehende Ausgangssymbol für eine zweite Verzögerungszeit zu verzögern.

15. Verfahren nach Anspruch 13, bei dem ein digitales Register verwendet wird, um das erste Ausgangssymbol zu speichern, wodurch das erste Ausgangssymbol für eine erste Verzögerungszeit verzögert wird.

16. Verfahren nach Anspruch 1, bei dem der Schritt des Abänderns des ersten Ausgangssymbols das Abändern einer Amplitude des ersten Ausgangssymbols umfasst.

17. Verfahren nach Anspruch 16, bei dem der Schritt des Abänderns der Amplitude des ersten Ausgangssymbols das Abändern der Amplitude des ersten Ausgangssymbols auf der Basis der Amplitude des ersten Ausgangssymbols umfasst.

18. Verfahren nach Anspruch 16, bei dem der Schritt des Abänderns der Amplitude des ersten Ausgangssymbols das Abändern der Amplitude des ersten Ausgangssymbols auf der Basis der Amplitude des vorangehenden Ausgangssymbols umfasst.

19. Verfahren nach Anspruch 16, bei dem der Schritt des Abänderns der Amplitude des ersten Ausgangssymbols das Abändern der Amplitude des ersten Ausgangssymbols auf der Basis der Amplitude des nachfolgenden Ausgangssymbols umfasst.

20. Verfahren nach Anspruch 16, bei dem der Schritt des Abänderns der Amplitude des ersten Ausgangssymbols das Abändern der Amplitude des ersten Ausgangssymbols auf der Basis der Phase des ersten Ausgangssymbols umfasst.

21. Verfahren nach Anspruch 16, bei dem der Schritt des Abänderns der Amplitude des ersten Ausgangssymbols das Abändern der Amplitude des ersten Ausgangssymbols auf der Basis der Phase des vorangehenden Ausgangssymbols umfasst.

22. Verfahren nach Anspruch 16, bei dem der Schritt des Abänderns der Amplitude des ersten Ausgangssymbols das Abändern der Amplitude des ersten Ausgangssymbols auf der Basis der Amplitude des nachfolgenden Ausgangssymbols umfasst.

23. Verfahren nach Anspruch 1, weiterhin umfassend den Schritt des weiteren Abänderns des ersten Ausgangssymbols gemäß einer Amplitude eines zweiten vorangehenden Ausgangssymbols und eines zweiten nachfolgenden Ausgangssymbols.

24. Verfahren nach Anspruch 1, bei dem die Signaleigenschaft des vorangehenden Ausgangssymbols eine erste Frequenz ist, die Signaleigenschaft des nachfolgenden Ausgangssymbols eine dritte Frequenz ist und die Signaleigenschaft des nachfolgenden Ausgangssymbols eine zweite Frequenz ist, und weiterhin umfassend den Schritt des Abfragens des Ausgangssignals, um eine Frequenz des ersten Ausgangssymbols zu bestimmen.

25. Verfahren nach Anspruch 24, bei dem der Schritt des Abänderns des ersten Ausgangssymbols das Abändern der Frequenz des ersten Ausgangssymbols umfasst.

26. Verfahren nach Anspruch 25, bei dem der Schritt des Abänderns der Frequenz des ersten Ausgangssymbols das Abändern der Frequenz des ersten Ausgangssymbols auf der Basis der Frequenz des vorangehenden Ausgangssymbols umfasst.

27. Verfahren nach Anspruch 22, bei dem der Schritt des Abänderns der Frequenz des ersten Ausgangssymbols das Abändern der Frequenz des ersten Ausgangssymbols auf der Basis der Frequenz des nachfolgenden Ausgangssymbols umfasst.

**28.** Verfahren nach Anspruch 22, bei dem der Schritt des Abänderns der Frequenz des ersten Ausgangssymbols das Abändern der Frequenz des ersten Ausgangssymbols auf der Basis der Frequenz des ersten Ausgangssymbols umfasst.

**29.** Verfahren nach Anspruch 1, bei dem die Signaleigenschaft des vorangehenden Ausgangssymbols eine erste Phase und die Signaleigenschaft des nachfolgenden Ausgangssymbols eine zweite Phase ist, und weiterhin umfassend den Schritt des Abfragens des Ausgangssignals, um eine Phase des ersten Ausgangssymbols zu bestimmen.

**30.** Verfahren nach Anspruch 29, bei dem der Schritt des Abänderns des ersten Ausgangssymbols das Abändern einer Phase des ersten Ausgangssymbols umfasst.

**31.** Verfahren nach Anspruch 30, bei dem der Schritt des Abänderns der Phase des ersten Ausgangssymbols das Abändern der Phase des ersten Ausgangssymbols auf der Basis der Phase des ersten Ausgangssymbols umfasst.

**32.** Verfahren nach Anspruch 30, bei dem der Schritt des Abänderns der Phase des ersten Ausgangssymbols das Abändern der Phase des ersten Ausgangssymbols auf der Basis der Phase des nachfolgenden Ausgangssymbols umfasst.

**33.** Verfahren nach Anspruch 30, bei dem der Schritt des Abänderns der Phase des ersten Ausgangssymbols das Abändern der Phase des ersten Ausgangssymbols auf der Basis der Phase des vorangehenden Ausgangssymbols umfasst.

**34.** Verfahren nach Anspruch 30, weiterhin umfassend den Schritt des weiteren Abänderns des ersten Ausgangssymbols gemäß einer Phase eines zweiten vorangehenden Ausgangssymbols und einer Phase des zweiten nachfolgenden Ausgangssymbols.

**35.** Verfahren nach Anspruch 30, bei dem der Schritt des Abänderns der Phase des ersten Ausgangssymbols von der Amplitude des vorangehenden Ausgangssymbols abhängt.

**36.** Verfahren nach Anspruch 30, bei dem der Schritt des Abänderns der Phase des ersten Ausgangssymbols von der Amplitude des nachfolgenden Ausgangssymbols abhängt.

**37.** Verfahren nach Anspruch 30, bei dem der Schritt des Abänderns der Phase des ersten Ausgangssymbols von der Amplitude des ersten Ausgangssymbols abhängt.

**38.** Verfahren zum Erhöhen des Kanaldatenraten-Durchsatzes in einem Lichtleitfaser-Kommunikationssystem bei Minimierung einer Fehlerbitrate, wobei das Verfahren folgende Schritte umfasst:

Empfangen eines digitalen Eingangssignals, das m Eingangsdatenströme enthält, wobei jeder Eingangsdatenstrom eine Abfolge von Eingangsimpulsen enthält und jeder Eingangsimpuls einen von zwei Impulspegeln hat;
Erzeugen eines digitalen m-Bit-Eingangswortes, das m Bits hat und ein Bit aus jedem der m Eingangsdatenströme enthält, und Abbilden des digitalen m-Bit-Eingangswortes in ein erstes fehlerbeständiges digitales Eingangswort, das n Bits hat, wobei $n \geq m$;
Umwandeln des ersten fehlerbständigen digitalen Eingangswortes in ein zweites fehlerbeständiges digitales Eingangswort unter Verwendung eines fehlerbeständigen Codes;
Umwandeln jedes zweiten fehlerbeständigen digitalen Eingangswortes in ein entsprechendes fehlerbeständiges Ausgangssymbol, das einen von $2^n$ eindeutigen Werten hat;
Erzeugen eines Ausgangssignals, das eine Abfolge von fehlerbeständigen Ausgangssymbolen enthält; und
Senden jedes fehlerbeständigen Ausgangssymbols zu einem Empfänger über eine Lichtleitfaserverbindung.

**39.** Verfahren nach Anspruch 38, bei dem das digitale Eingangssignal über m getrennte Kanäle empfangen wird, wobei das Ausgangssignal eine n-fach höhere Datenrate als jene eines der m separaten Kanäle hat.

**40.** Verfahren nach Anspruch 38, bei dem das digitale Eingangssignal über einen einzigen Kanal empfangen wird.

**41.** Verfahren nach Anspruch 38, bei dem des fehlerbständige Ausgangssymbol durch einen Faltungscode codiert wird.

**42.** Verfahren nach Anspruch 38, bei dem des fehlerbeständige Ausgangssymbol durch Blockcodierung codiert wird.

**43.** Verfahren nach Anspruch 38, bei dem das fehlerbeständige Ausgangssymbol durch Trelliscodierung codiert wird.

**44.** Verfahren nach Anspruch 38, bei dem der fehlerbeständige Code ein Gray-Code ist.

**45.** Verfahren nach Anspruch 44, bei dem der Gray-Code **dadurch gekennzeichnet ist, dass** er benachbarte Wörter hat, die voneinander durch eine Änderung in lediglich einem Bit unterschieden werden.

**46.** Verfahren nach Anspruch 38, bei dem der fehlerbeständige Code ein Q-Gray-Code ist.

**47.** Verfahren nach Anspruch 46, bei dem der Q-Gray-Code **dadurch gekennzeichnet** ist, das er benachbarte Wörter hat, die voneinander durch eine Änderung in lediglich einem Bit unterschieden werden.

**48.** Verfahren zum Erhöhen des Kanaldatenraten-Durchsatzes in einem Lichtleitfaser-Kommunikationssystem bei Minimierung einer Fehlerbitrate, wobei das Verfahren folgende Schritte umfasst:

Empfangen eines digitalen Eingangssignals, das m Eingangsdatenströme enthält, wobei jeder Eingangsdatenstrom eine Abfolge von Eingangsimpulsen enthält und jeder Eingangsimpuls einen von zwei Impulspegeln hat;
Erzeugen eines digitalen m-Bit-Eingangswortes, das m Bits hat und ein Bit aus jedem der m Eingangsdatenströme enthält, und Abbilden des digitalen m-Bit-Eingangswortes in ein fehlerbeständiges digitales Eingangswort, das n Bits hat, wobei $n \geq m$;
Umwandeln jedes fehlerbeständigen digitalen Eingangswortes in ein entsprechendes Ausgangssymbol, das einen von $2^n$ eindeutigen Werten hat;
Erzeugen eines Ausgangssignals, das eine Abfolge von Ausgangssymbolen enthält; und
Hinzufügen eines signalabhängigen Bias zu dem Ausgangssignal, so dass ein lineares Ansprechverhalten in einer optischen Quelle erzeugt wird; und
Verwenden der optischen Quelle, um das Ausgangssignal zu senden.

**49.** Verfahren nach Anspruch 48, bei dem das digitale Eingangssignal von m separaten Kanälen empfangen wird, wobei das Ausgangssignal eine n-fach höhere Datenrate als jene eines der m separaten Kanäle hat.

**50.** Verfahren nach Anspruch 48, bei dem das digitale Eingangssignal über einen einzigen Kanal empfangen wird.

**51.** Verfahren nach Anspruch 48, bei dem eine Fehlerkorrekturcodierung auf die Eingangsdaten angewendet wird.

**52.** Verfahren nach Anspruch 48, bei dem ein Steuerstrom die optische Quelle steuert.

**53.** Verfahren nach Anspruch 48, bei dem der Schritt des Hinzufügens eines signalabhängigen Bias das Ändern des Steuerstroms, der dem Ausgangssignal zugeordnet ist, um einen Fehlerstrom umfasst.

**54.** Verfahren nach Anspruch 52, bei dem der Steuerstrom eine Laserdiode steuert.

**55.** Verfahren nach Anspruch 54, bei dem ein nichtlineares Element verwendet wird, um einen Fehlerstrom von dem Steuerstrom zu shunten.

**56.** Verfahren nach Anspruch 55, bei dem die Laserdiode eine nichtlineare optische Modulatorvorrichtung ist.

**57.** Verfahren nach Anspruch 48, bei dem eine Steuerspannung die optische Quelle steuert.

**58.** Verfahren nach Anspruch 57, bei dem ein Reihenwiderstand verwendet wird, um einen nichtlinearen Shunt-Strom in einen nichtlinearen Spannungsabfall umzuwandeln und so die Steuerspannung zu verringern.

**59.** Verfahren nach Anspruch 57, bei dem der Schritt des Hinzufügens eines signalabhängigen Bias das Justieren der Steuerspannung, die dem Ausgangssignal zugeordnet ist, um eine Fehlerspannung umfasst.

**60.** Verfahren nach Anspruch 52, bei dem der Steuerstrom einen Mach-Zehnder-Modulator steuert.

**61.** Verfahren nach Anspruch 60, bei dem ein Reihenwiderstand verwendet wird, um einen nichtlinearen Shunt-Strom in einen nichtlinearen Spannungsabfall umzuwandeln und so die Steuerspannung zu verringern.

**62.** Optischer Sender (202) zum Erzeugen eines Lichtleitfaser-Kommunikationssignals für die Sendung über eine Lichtleitfaser (204) bei Minimierung einer Bitfehlerrate, wobei der optische Sender umfasst:

eine Symbolisiereinrichtung (510, 502, 504, 506, 512) zum Empfangen eines Eingangsdatensignals, das $m$ Eingangsdatenströme enthält, wobei jeder Eingangsdatenstrom eine Abfolge von Impulsen enthält und jeder Impuls einen von zwei eindeutigen Impulspegeln hat, wobei die Symbolisiereinrichtung derart funktionsfähig ist, dass sie ein erstes fehlerbeständiges digitales m-Bit-Eingangswort erzeugt, das ein Bit aus jedem der $m$ Eingangsdatenströme enthält, und das digitale m-Bit-Eingangswort in ein erstes fehlerbeständiges digitales n-Bit-Eingangswort abbildet, das $n$ Bits hat, wobei $n \geq m$, und weiterhin derart funktionsfähig ist, dass sie das erste fehlerbeständige digitale Eingangswort in ein zweites fehlerbeständiges digitales Eingangswort umwandelt und jedes zweite fehlerbeständige digitale Eingangswort in ein entsprechendes fehlerbeständiges Ausgangssymbol, das einen von $2^n$ eindeutigen Werten hat, mit Hilfe eines fehlerbeständigen Codes umwandelt; und eine optische Quelle (508) zum Senden eines Ausgangssignals, das wenigstens ein fehlerbeständiges Ausgangssymbol enthält, über die Lichtleitfaser, wobei jedes fehlerbeständige Ausgangssymbol einem der $2^n$ Intensitätspegeln der optischen Quelle entspricht.

**63.** Optischer Sender nach Anspruch 62, bei dem das Eingangsdatensignal über $m$ separate Kanäle empfangen wird, wobei das Ausgangssignal eine $n$-fach höhere Datenrate hat als jene der $m$ separaten Kanäle.

**64.** Optischer Sender nach Anspruch 62, bei dem das Eingangsdatensignal über einen einzigen Kanal empfangen wird.

**65.** Optischer Sender nach Anspruch 62, bei dem das fehlerbeständige Ausgangssymbol durch einen Faltungscode codiert ist.

**66.** Optischer Sender nach Anspruch 62, bei dem das fehlerbeständige Ausgangssymbol durch Trelliscodierung codiert ist.

**67.** Optischer Sender nach Anspruch 62, bei dem des fehlerbeständige Ausgangssymbol durch Blockcodierung codiert ist.

**68.** Optischer Sender nach Anspruch 62, bei dem der fehlerbeständige Code ein Gray-Code ist.

**69.** Optischer Sender nach Anspruch 68, bei dem der Gray-Code **dadurch gekennzeichnet** ist, das er benachbarte Wörter hat, die voneinander durch eine Änderung in lediglich einem Bit unterschieden werden.

**70.** Optischer Sender nach Anspruch 62, bei dem der fehlerbeständige Code ein Q-Gray-Code ist.

**71.** Optischer Sender nach Anspruch 70, bei dem der Q-Gray-Code **dadurch gekennzeichnet ist, dass** er benachbarte Wörter hat, die voneinander durch eine Änderung in lediglich einem Bit unterschieden werden.

**72.** Sendeverbindung (202, 204, 206) zum Senden eines Lichtleitfaser-Kommunikationssignals für die Sendung über eine Lichtleitfaser (204), wobei die optische Sendeverbindung umfasst:

eine Symbolisiereinrichtung (510, 502, 504, 506, 512) zum Empfangen eines Eingangsdatensignals, das $m$ Eingangsdatenströme enthält, wobei jeder Eingangsdatenstrom eine Abfolge von Impulsen enthält und jeder Impuls einen von zwei eindeutigen Impulspegeln hat, wobei die Symbolisiereinrichtung derart funktionsfähig ist, dass sie ein digitales m-Bit-Eingangswort erzeugt, das $m$ Bits hat, die ein Bit aus jedem der $m$ Eingangsdatenströme enthalten, und das digitale m-Bit-Eingangswort in ein fehlerbeständiges digitales Eingangswort abbildet, das $n$ Bits hat, wobei $n \geq m$, und weiterhin derart funktionsfähig ist, dass sie jedes fehlerbeständige digitale Eingangswort in ein entsprechendes Ausgangssymbol umwandelt, das einen von $2^n$ eindeutigen Werten repräsentiert, und ein Ausgangssignal erzeugt, das eine Abfolge von Ausgangssymbolen enthält; und eine optische Quelle (508) zum Senden eines Ausgangssignals, das eine Abfolge der optischen Symbole enthält, über die Lichtleitfaser, wobei jedes optische Symbol einen von $2^n$ Intensitätspegel hat; wobei die Symbolisiereinrichtung weiterhin derart funktionsfähig ist, dass sie eine Signaleigenschaft jedes optischen Signals gemäß einer Signaleigenschaft eines vorangehenden optischen Symbols und einer Signaleigenschaft eines nachfolgenden optischen Symbols umwandelt.

**73.** Sendeverbindung nach Anspruch 72, bei der das Eingangsdatensignal über m separate Kanäle empfangen wird, wobei das Ausgangssignal eine n-fach höhere Datenrate hat als jene der m separaten Kanäle.

74. Sendeverbindung nach Anspruch 72, bei der das digitale Eingangsdatensignal über einen einzigen Kanal empfangen wird.

75. Sendeverbindung nach Anspruch 72, bei der die Symbolisiereinrichtung weiterhin einen Vorverzerrungsschaltkreis umfasst.

76. Sendeverbindung nach Anspruch 75, bei der der Vorverzerrungsschaltkreis weiterhin derart funktionsfähig ist, dass er das Ausgangssignal abfragt, um die Signaleigenschaft des ersten Ausgangssymbols zu bestimmen.

77. Sendeverbindung nach Anspruch 75, bei der der Vorverzerrungsschaltkreis weiterhin derart funktionsfähig ist, dass er das Ausgangssignal abfragt, um die Signaleigenschaft des vorangehenden Ausgangssymbols zu bestimmen.

78. Sendeverbindung nach Anspruch 75, bei der der Vorverzerrungsschaltkreis weiterhin derart funktionsfähig ist, dass er das Ausgangssignal abfragt, um die Signaleigenschaft des nachfolgenden Ausgangssymbols zu bestimmen.

79. Sendeverbindung nach Anspruch 75, bei der der Vorverzerrungsschaltkreis die Funktion des Zugreifens auf eine Suchtabelle ausführt, um eine geeignete Abänderung des gesendeten optischen Symbols zu bestimmen.

80. Sendeverbindung nach Anspruch 75, bei der die Signaleigenschaft des ersten Ausgangssymbols eine Amplitude des ersten Ausgangssignals ist und der Vorverzerrungsschaltkreis weiterhin derart funktionsfähig ist, dass er das erste Ausgangssymbol durch Abändern der Amplitude des ersten Ausgangssymbols abändert.

81. Sendeverbindung nach Anspruch 80, bei der der Vorverzerrungsschaltkreis weiterhin derart funktionsfähig ist, dass er die Amplitude des ersten Ausgangssymbols auf der Basis der Amplitude des ersten Ausgangssymbols abändert.

82. Sendeverbindung nach Anspruch 80, bei der der Vorverzerrungsschaltkreis weiterhin derart funktionsfähig ist, dass er die Amplitude des ersten Ausgangssymbols auf der Basis der Amplitude des nachfolgenden Ausgangssymbols abändert.

83. Sendeverbindung nach Anspruch 80, bei der der Vorverzerrungsschaltkreis weiterhin derart funktionsfähig ist, dass er die Amplitude des ersten Ausgangssymbols auf der Basis der Amplitude des vorausgehenden Ausgangssymbols abändert.

84. Sendeverbindung nach Anspruch 75, bei der die Signaleigenschaft des ersten Ausgangssymbols eine Phase des ersten Ausgangssignals ist und der Vorverzerrungsschaltkreis weiterhin derart funktionsfähig ist, dass er des erste Ausgangssymbol durch Abändern der Phase des ersten Ausgangssymbols abändert.

85. Sendeverbindung nach Anspruch 84, bei der der Vorverzerrungsschaltkreis weiterhin derart funktionsfähig ist, dass er die Phase des ersten Ausgangssymbols auf der Basis der Phase des ersten Ausgangssymbols abändert.

86. Sendeverbindung nach Anspruch 84, bei der der Vorverzerrungsschaltkreis weiterhin derart funktionsfähig ist, dass er die Phase des ersten Ausgangssymbols auf der Basis der Phase des nachfolgenden Ausgangssymbols abändert.

87. Senderverbindung nach Anspruch 84, bei der der Vorverzerrungsschaltkreis weiterhin derart funktionsfähig ist, dass er die Phase des ersten Ausgangssymbols auf der Basis der Phase des vorangehenden Ausgangssymbols abändert.

88. Sendeverbindung nach Anspruch 75, bei der die Signaleigenschaft des ersten Ausgangssymbols eine Frequenz des ersten Ausgangssignals und der Vorverzerrungsschaltkreis weiterhin derart funktionsfähig ist, dass er das erste Ausgangssymbol abändert, indem er die Frequenz des ersten Ausgangssymbols abändert.

89. Sendeverbindung nach Anspruch 88, bei der der Vorverzerrungsschaltkreis weiterhin derart funktionsfähig ist, dass er die Frequenz des ersten Ausgangssymbols auf der Basis der Frequenz des ersten Ausgangssymbols abändert.

90. Sendeverbindung nach Anspruch 88, bei der der Vorverzerrungsschaltkreis weiteren derart funktionsfähig ist, dass er die Frequenz des ersten Ausgangssymbols auf der Basis der Frequenz des vorangehenden Ausgangssymbols abändert.

**91.** Sendeverbindung nach Anspruch 88, bei der der Vorverzerrungsschaltkreis weiterhin derart funktionsfähig ist, dass er die Frequenz des ersten Ausgangssymbols auf der Basis der Frequenz des nachfolgenden Ausgangssymbols abändert.

**92.** Sendeverbindung nach Anspruch 72, weiterhin umfassend eine Desymbolisiereinrichtung, umfassend einen Fotodetektor, einen Nach-Kompensationsschaltkreis und einen Decoder.

**93.** Sendeverbindung nach Anspruch 92, bei der die Desymbolisiereinrichtung einem Empfänger zugeordnet ist, der funktionsmäßig mit der Lichtleitfaser verbunden ist, und bei der die Desymbolisiereinrichtung derart funktionsfähig ist, dass sie das Ausgangssignal in n Ausgangsströme decodiert, wobei jeder Ausgangstrom eine Datenrate von 1/n der Ausgangssignaldatenrate hat.

**94.** Optischer Sender (202) zum Erzeugen eines Lichtleitfaser-Kommunikationssignals für die Sendung über eine Lichtleitfaser (204), wobei der optische Sender umfasst:

eine Symbolisiereinrichtung (510, 502, 504, 506, 512) zum Empfangen eines Eingangsdatensignals, das m Eingangsdatenströme enthält, wobei jeder Eingangsdatenstrom eine Abfolge von Impulsen enthält und jeder Impuls einen von zwei eindeutigen Impulspegeln hat, wobei die Symbolisiereinrichtung derart funktionsfähig ist, dass sie ein digitales m-Bit-Eingangswort erzeugt, das m Bits hat, die ein Bit aus jedem der m Eingangsdatenströme enthalten, und das digitale m-Bit-Eingangswort in ein fehlerbeständiges digitales Eingangswort abbildet, das n Bits hat, wobei $n \geq m$, und weiterhin derart funktionsfähig ist, dass sie jedes fehlerbeständige digitale Eingangswort in ein entsprechendes Ausgangssymbol umwandelt, das einen von $2^n$ eindeutigen Werten repräsentiert, und ein Ausgangssignal erzeugt, dass eine Abfolge von Ausgangssymbolen enthält; und
eine optische Quelle (508) zum Senden eines Ausgangssignals, das wenigstens ein optisches Symbol enthält, über die Lichtleitfaser, wobei jedes optische Symbol durch einen von $2^n$ optischen Intensitätspegeln dargestellt ist; und
die Symbolisiereinrichtung weiterhin einen Linearisierschaltkreis (512) enthält, der derart funktionsfähig ist, dass er einen Korrekturversatz in dem Ausgangssignal hervorruft, um einem nichtlinearen Ansprechverhalten entgegenzuwirken, das der optischen Quelle zugeordnet ist.

**95.** Optischer Sender nach Anspruch 94, bei dem das Eingangsdatensignal über m separate Kanäle empfangen wird, wobei das Ausgangssignal eine *n*-fach höhere Datenrate als jene der *m* separaten Kanäle hat.

**96.** Optischer Sender nach Anspruch 94, bei dem das Eingangsdatensignal über einen einzelnen Kanal empfangen wird.

**97.** Optischer Sender nach Anspruch 94, bei dem ein Steuerstrom die optische Quelle steuert.

**98.** Optischer Sender nach Anspruch 94, bei dem der Linearisierschaltkreis weiterhin derart funktionsfähig ist, dass er den Steuerstrom, der dem Ausgangssignal zugeordnet ist, durch einen Fehlerstrom verringert.

**99.** Optischer Sender nach Anspruch 94, bei dem der Linearisierschaltkreis ein nichtlineares Element umfasst, das derart funktionsfähig ist, dass es den Fehlerstrom von dem Steuerstrom shuntet.

**100.** Optischer Sender nach Anspruch 94, bei dem der Korrekturversatz eine Verringerung der Steuerspannung, die dem Ausgangssignal zugeordnet ist, um eine Fehlerspannung umfasst.

**101.** Verfahren zum Erhöhen des Datendurchsatzes eines bestehenden Lichtleitfaser-Kommunikationssystems, ohne dass eine Lichtleitfaseranlage ersetzt wird, die dem bestehenden Lichtleifaser-Kommunikationssystem zugeordnet ist, wobei das Verfahren folgende Schritte umfasst:

Ersetzen eines bestehenden Senders durch einen verbesserten Sender, der eine Symbolisiereinrichtung zum Empfangen eines Eingangsdatensignals hat, das Eingangsdatenströme enthält, wobei jeder Eingangsdatenstrom eine Abfolge von Impulsen enthält und jeder Impuls einen von zwei eindeutigen Impulspegeln hat, wobei die Symbolisiereinrichtung derart funktionsfähig ist, dass sie ein digitales m-Bit-Eingangswort erzeugt, das *m* Bits hat, die ein Bit aus jedem der m Eingangsdatenströme enthalten, und das digitale m-Bit-Eingangswort in ein fehlerbeständiges digitales Eingangswort abbildet, das n Bits hat, wobei $n \geq m$, und weiterhin derart funktionsfähig ist, dass sie jedes fehlerbeständige digitale Eingangswort in ein entsprechendes Ausgangssymbol umwandelt, das einen von $2^n$ eindeutigen Werten repräsentiert, und ein Ausgangssignal erzeugt, das eine Abfolge von Ausgangssymbolen enthält; und

Ersetzen eines bestehenden Empfängers durch einen verbesserten Empfänger, der eine Desymbolisiereinrichtung hat, die derart funktionsfähig ist, dass sie ein Ausgangssignal, das von dem verbesserten Sender erzeugt wird, empfängt und decodiert, wobei das Ausgangssignal eine Abfolge von Ausgangssymbolen enthält.

102. Verfahren nach Anspruch 101, bei dem die Symbolisiereinrichtung weiterhin derart funktionsfähig ist, dass sie jedes Ausgangssymbol in das fehlergeschützte n-Bit-Symbol mit Hilfe einer Fehlerschutzcodierung umwandelt, und das gesendete Ausgangssignal eine *n-fach* höhere Datenrate als eine Datenrate hat, die jedem der separaten Eingangsdatensignale zugeordnet ist.

**Revendications**

1. Procédé d'augmentation du débit de données de canal dans un système de communication par fibre optique tout en minimisant un taux d'erreur binaire, le procédé comprenant les étapes de :

réception d'un ou plusieurs signaux d'entrée numériques comprenant m flux de données d'entrée, chaque flux de données d'entrée comprenant une série d'impulsions d'entrée, chaque impulsion d'entrée ayant l'un de deux niveaux d'impulsion ;

création d'un mot d'entrée numérique à m bits ayant m bits qui comprend un bit de chacun des m flux de données d'entrée et mappage du mot d'entrée numérique à m bits en un mot d'entrée numérique résistant aux erreurs ayant n bits, où $n \geq m$ ;

conversion de chaque mot d'entrée numérique résistant aux erreurs en un symbole de sortie correspondant représentant l'une de $2^n$ valeurs distinctes ;

génération d'un signal de sortie comprenant une série de symboles de sortie ; et

modification d'un premier symbole de sortie, en fonction d'une propriété de signal d'un symbole de sortie précédent et d'une propriété de signal d'un symbole de sortie suivant.

2. Procédé selon la revendication 1, dans lequel l'étape de modification du premier symbole de sortie comprend l'accès à une table de consultation pour déterminer une modification appropriée d'une propriété de signal du premier symbole de sortie.

3. Procédé selon la revendication 1, dans lequel l'étape de modification du premier symbole de sortie est effectuée par un circuit de pré-compensation.

4. Procédé selon la revendication 1, dans lequel le signal d'entrée numérique est reçu de m canaux distincts, le signal de sortie ayant un débit de données n fois supérieur à celui de l'un des m canaux distincts.

5. Procédé selon la revendication 1, dans lequel le signal d'entrée numérique est reçu d'un canal unique.

6. Procédé selon la revendication 1, dans lequel l'occupation spectrale du signal optique est minimisée.

7. Procédé selon la revendication 1, dans lequel la propriété de signal du symbole de sortie précédent est une première amplitude et la propriété de signal du symbole de sortie suivant est une deuxième amplitude, et comprenant en outre l'étape de l'interrogation du signal de sortie pour déterminer une amplitude du premier symbole de sortie.

8. Procédé selon la revendication 7, comprenant en outre l'étape de l'interrogation du signal de sortie pour déterminer l'amplitude du symbole de sortie précédent.

9. Procédé selon la revendication 7, comprenant en outre l'étape de l'interrogation du signal de sortie pour déterminer l'amplitude du symbole de sortie suivant.

10. Procédé selon la revendication 7, dans lequel le premier symbole de sortie est retardé pour déterminer l'amplitude du symbole de sortie suivant.

11. Procédé selon la revendication 10, dans lequel une ligne de transmission est utilisée pour retarder le premier symbole de sortie d'un premier délai.

**12.** Procédé selon la revendication 10, dans lequel un registre numérique est utilisé pour stocker le premier symbole de sortie en retardant de ce fait le premier symbole de sortie d'un premier délai.

**13.** Procédé selon la revendication 7, dans lequel le symbole de sortie précédent est retardé pour déterminer l'amplitude du premier symbole de sortie.

**14.** Procédé selon la revendication 13, dans lequel une ligne de transmission est utilisée pour retarder le symbole de sortie précédent d'un deuxième délai.

**15.** Procédé selon la revendication 13, dans lequel un registre numérique est utilisé pour stocker le premier symbole de sortie en retardant de ce fait le premier symbole de sortie d'un premier délai.

**16.** Procédé selon la revendication 1, dans lequel l'étape de modification du premier symbole de sortie comprend la modification d'une amplitude du premier symbole de sortie.

**17.** Procédé selon la revendication 16, dans lequel l'étape de modification de l'amplitude du premier symbole de sortie comprend la modification de l'amplitude du premier symbole de sortie sur la base de l'amplitude du premier symbole de sortie.

**18.** Procédé selon la revendication 16, dans lequel l'étape de modification de l'amplitude du premier symbole de sortie comprend la modification de l'amplitude du premier symbole de sortie sur la base de l'amplitude du symbole de sortie précédent.

**19.** Procédé selon la revendication 16, dans lequel l'étape de modification de l'amplitude du premier symbole de sortie comprend la modification de l'amplitude du premier symbole de sortie sur la base de l'amplitude du symbole de sortie suivant.

**20.** Procédé selon la revendication 16, dans lequel l'étape de modification de l'amplitude du premier symbole de sortie comprend la modification de l'amplitude du premier symbole de sortie sur la base de la phase du premier symbole de sortie.

**21.** Procédé selon la revendication 16, dans lequel l'étape de modification de l'amplitude du premier symbole de sortie comprend la modification de l'amplitude du premier symbole de sortie sur la base de la phase du symbole de sortie précédent.

**22.** Procédé selon la revendication 16, dans lequel l'étape de modification de l'amplitude du premier symbole de sortie comprend la modification de l'amplitude du premier symbole de sortie sur la base de la phase du symbole de sortie suivant.

**23.** Procédé selon la revendication 1, caractérisé comprenant en outre l'étape de modification en outre du premier symbole de sortie en fonction d'une amplitude d'un deuxième symbole de sortie précédent et d'un deuxième symbole de sortie suivant.

**24.** Procédé selon la revendication 1, dans lequel la propriété de signal du symbole de sortie précédent est une première fréquence, la propriété de signal du symbole de sortie suivant est une troisième fréquence et la propriété de signal du symbole de sortie suivant est une deuxième fréquence et comprenant en outre l'étape de l'interrogation du signal de sortie pour déterminer une fréquence du premier symbole de sortie.

**25.** Procédé selon la revendication 24, dans lequel l'étape de modification du premier symbole de sortie comprend la modification de la fréquence du premier symbole de sortie.

**26.** Procédé selon la revendication 25, dans lequel l'étape de modification de la fréquence du premier symbole de sortie comprend la modification de la fréquence du premier symbole de sortie sur la base de la fréquence du symbole de sortie précédent.

**27.** Procédé selon la revendication 22, dans lequel l'étape de modification de la fréquence du premier symbole de sortie comprend la modification de la fréquence du premier symbole de sortie sur la base de la fréquence du symbole de sortie suivant.

**28.** Procédé selon la revendication 22, dans lequel l'étape de modification de la fréquence du premier symbole de sortie comprend la modification de la fréquence du premier symbole de sortie sur la base de la fréquence du premier symbole de sortie.

**29.** Procédé selon la revendication 1, dans lequel la propriété de signal du symbole de sortie précédent est une première phase et la propriété de signal du symbole de sortie suivant est une deuxième phase et comprenant en outre l'étape de l'interrogation du signal de sortie pour déterminer une phase du premier symbole de sortie.

**30.** Procédé selon la revendication 29, dans lequel l'étape de modification du premier symbole de sortie comprend la modification d'une phase du premier symbole de sortie.

**31.** Procédé selon la revendication 30, dans lequel l'étape de modification de la phase du premier symbole de sortie comprend la modification de la phase du premier symbole de sortie sur la base de la phase du premier symbole de sortie.

**32.** Procédé selon la revendication 30, dans lequel l'étape de modification de la phase du premier symbole de sortie comprend la modification de la phase du premier symbole de sortie sur la base de la phase du symbole de sortie suivant.

**33.** Procédé selon la revendication 30, dans lequel l'étape de modification de la phase du premier symbole de sortie comprend la modification de la phase du premier symbole de sortie sur la base de la phase du symbole de sortie précédent.

**34.** Procédé selon la revendication 30, comprenant en outre l'étape de modification en outre du premier symbole de sortie en fonction d'une phase d'un deuxième symbole de sortie précédent et d'une phase d'un deuxième symbole de sortie suivant.

**35.** Procédé selon la revendication 30, dans lequel l'étape de modification de la phase du premier symbole de sortie dépend de l'amplitude du symbole de sortie précédent.

**36.** Procédé selon la revendication 30, dans lequel l'étape de modification de la phase du premier symbole de sortie dépend de l'amplitude du symbole de sortie suivant.

**37.** Procédé selon la revendication 30, dans lequel l'étape de modification de la phase du premier symbole de sortie dépend de l'amplitude du premier symbole de sortie.

**38.** Procédé d'augmentation du débit de données de canal dans un système de communication par fibre optique tout en minimisant un taux d'erreur binaire, le procédé comprenant les étapes de :

réception d'un signal d'entrée numérique comprenant m flux de données d'entrée, chaque flux de données d'entrée comprenant une série d'impulsions d'entrée, chaque impulsion d'entrée ayant l'un de deux niveaux d'impulsion ;
création d'un mot d'entrée numérique à m bits ayant m bits qui comprend un bit de chacun des m flux de données d'entrée et mappage du mot d'entrée numérique à m bits en un premier mot d'entrée numérique résistant aux erreurs ayant n bits, où $n \geq m$ ;
conversion du premier mot d'entrée numérique résistant aux erreurs en un deuxième mot d'entrée numérique résistant aux erreurs en utilisant un code résistant aux erreurs ;
conversion de chaque deuxième mot d'entrée numérique résistant aux erreurs en un symbole de sortie résistant aux erreurs correspondant ayant l'une de $2^n$ valeurs distinctes ;
génération d'un signal de sortie comprenant une série de symboles de sortie résistant aux erreurs ; et
transmission de chaque symbole de sortie résistant aux erreurs à un récepteur sur une liaison par fibre optique.

**39.** Procédé selon la revendication 38, dans lequel le signal d'entrée numérique est reçu de m canaux distincts, le signal de sortie ayant un débit de données n fois supérieur à celui de l'un des m canaux distincts.

**40.** Procédé selon la revendication 38, dans lequel le signal d'entrée numérique est reçu d'un canal unique.

**41.** Procédé selon la revendication 38, dans lequel le symbole de sortie résistant aux erreurs est codé par convolution.

**42.** Procédé selon la revendication 38, dans lequel le symbole de sortie résistant aux erreurs est codé par codage de bloc.

**43.** Procédé selon la revendication 38, dans lequel le symbole de sortie résistant aux erreurs est codé par codage de treillis.

**44.** Procédé selon la revendication 38, dans lequel le code résistant aux erreurs est un code de Gray.

**45.** Procédé selon la revendication 44, dans lequel le code de Gray est **caractérisé en ce qu'**il a des mots adjacents différenciés l'un de l'autre par un changement d'un seul bit.

**46.** Procédé selon la revendication 38, dans lequel le code résistant aux erreurs est un code de Q-Gray.

**47.** Procédé selon la revendication 46, dans lequel le code de Q-Gray est **caractérisé en ce qu'**il a des mots adjacents différenciés l'un de l'autre par un changement d'un seul bit.

**48.** Procédé d'augmentation du débit de données de canal dans un système de communication par fibre optique tout en minimisant un taux d'erreur binaire, le procédé comprenant les étapes de :

réception d'un signal d'entrée numérique comprenant m flux de données d'entrée, chaque flux de données d'entrée comprenant une série d'impulsions d'entrée, chaque impulsion d'entrée ayant l'un de deux niveaux d'impulsion ;
création d'un mot d'entrée numérique à m bits ayant m bits qui comprend un bit de chacun des m flux de données d'entrée et mappage du mot d'entrée numérique à m bits en un mot d'entrée numérique résistant aux erreurs ayant n bits, où $n \geq m$ ;
conversion de chaque mot d'entrée numérique résistant aux erreurs en un symbole de sortie correspondant ayant l'une de $2^n$ valeurs distinctes ;
génération d'un signal de sortie comprenant une série de symboles de sortie ;
ajout d'une polarisation dépendant du signal au signal de sortie de manière à générer une réponse linéaire dans une source optique ; et
utilisation de la source optique pour transmettre le signal de sortie.

**49.** Procédé selon la revendication 48, dans lequel le signal d'entrée numérique est reçu de m canaux distincts, le signal de sortie ayant un débit de données n fois supérieur à celui de l'un des m canaux distincts.

**50.** Procédé selon la revendication 48, dans lequel le signal d'entrée numérique est reçu d'un canal unique.

**51.** Procédé selon la revendication 48, dans lequel le codage de correction d'erreur est appliqué aux données d'entrée.

**52.** Procédé selon la revendication 48, dans lequel une intensité d'entraînement commande la source optique.

**53.** Procédé selon la revendication 48, dans lequel l'étape d'ajout d'une polarisation dépendant du signal comprend le changement de l'intensité d'entraînement associée au signal de sortie par une intensité d'erreur.

**54.** Procédé selon la revendication 52, dans lequel l'intensité d'entraînement commande une diode laser.

**55.** Procédé selon la revendication 54, dans lequel un élément non linéaire est utilisé pour dériver une intensité d'erreur à partir de l'intensité d'entraînement.

**56.** Procédé selon la revendication 55, dans lequel la diode laser est un dispositif modulateur optique non linéaire.

**57.** Procédé selon la revendication 48, dans lequel une tension d'entraînement commande la source optique.

**58.** Procédé selon la revendication 57, dans lequel une résistance en série est utilisée pour convertir une intensité de dérivation non linéaire en une baisse de tension non linéaire pour réduire la tension d'entraînement.

**59.** Procédé selon la revendication 57, dans lequel l'étape d'ajout d'une polarisation dépendant du signal comprend l'ajustement de la tension d'entraînement associée au signal de sortie par une tension d'erreur.

**60.** Procédé selon la revendication 52, dans lequel l'entraînement commande un modulateur Mach-Zehnder.

**61.** Procédé selon la revendication 60, dans lequel une résistance en série est utilisée pour convertir une intensité de dérivation non linéaire en une baisse de tension non linéaire pour réduire la tension d'entraînement.

**62.** Émetteur optique (202) pour générer un signal de communication par fibre optique à transmettre sur une fibre optique (204) tout en minimisant un taux d'erreur binaire, l'émetteur optique comprenant :

un symboliseur (510, 502, 504, 506, 512) pour effectuer la réception d'un signal de données d'entrée comprenant m flux de données d'entrée, chaque flux de données d'entrée comprenant une série d'impulsions, chaque impulsion ayant l'un de deux niveaux d'impulsion distincts, dans lequel le symboliseur est opérationnel pour effectuer la création d'un premier mot d'entrée numérique à m bits résistant aux erreurs qui comprend un bit de chacun des m flux de données d'entrée et le mappage du mot d'entrée numérique à m bits en un premier mot d'entrée numérique à n bits résistant aux erreurs ayant n bits, où $n \geq m$, et en outre opérationnel pour effectuer la conversion du premier mot d'entrée numérique résistant aux erreurs en un deuxième mot d'entrée numérique résistant aux erreurs, et la conversion de chaque deuxième mot d'entrée numérique résistant aux erreurs en un symbole de sortie résistant aux erreurs correspondant ayant l'une de $2^n$ valeurs distinctes en utilisant un code résistant aux erreurs ; et
une source optique (508) pour effectuer la transmission d'un signal de sortie comprenant au moins un symbole de sortie résistant aux erreurs sur la fibre optique, chaque symbole de sortie résistant aux erreurs correspondant à l'un de $2^n$ niveaux d'intensité de source optique.

**63.** Émetteur optique selon la revendication 62, dans lequel le signal de données d'entrée est reçu de m canaux distincts, dans lequel le signal de sortie a un débit de données n fois supérieur à celui de l'un des m canaux distincts.

**64.** Émetteur optique selon la revendication 62, dans lequel le signal de données d'entrée est reçu d'un canal unique.

**65.** Émetteur optique selon la revendication 62, dans lequel le symbole de sortie résistant aux erreurs est codé par convolution.

**66.** Émetteur optique selon la revendication 62, dans lequel le symbole de sortie résistant aux erreurs est codé par codage de treillis.

**67.** Émetteur optique selon la revendication 62, dans lequel le symbole de sortie résistant aux erreurs est codé par codage de bloc.

**68.** Émetteur optique selon la revendication 62, dans lequel le code résistant aux erreurs est un code de Gray.

**69.** Émetteur optique selon la revendication 68, dans lequel le code de Gray est **caractérisé en ce qu'**il a des mots adjacents différenciés l'un de l'autre par un changement d'un seul bit.

**70.** Émetteur optique selon la revendication 62, dans lequel le code résistant aux erreurs est un code de Q-Gray.

**71.** Émetteur optique selon la revendication 70, dans lequel le code de Q-Gray est **caractérisé en ce qu'**il a des mots adjacents différenciés l'un de l'autre par un changement d'un seul bit.

**72.** Liaison de transmission (202, 204, 206) pour transmettre un signal de communication par fibre optique à transmettre sur une fibre optique (204), la liaison de transmission optique comprenant :

un symboliseur (510, 502, 504, 506, 512) pour effectuer la réception d'un signal de données d'entrée comprenant m flux de données d'entrée, chaque flux de données d'entrée comprenant une série d'impulsions, chaque impulsion ayant l'un de deux niveaux d'impulsion distincts, dans lequel le symboliseur est opérationnel pour effectuer la création d'un mot d'entrée numérique à m bits ayant m bits qui comprend un bit de chacun des m flux de données d'entrée et le mappage du mot d'entrée numérique à m bits en un mot d'entrée numérique résistant aux erreurs ayant n bits, où $n \geq m$, et en outre opérationnel pour effectuer la conversion de chaque mot d'entrée numérique résistant aux erreurs en un symbole de sortie correspondant représentant l'une de $2^n$ valeurs distinctes, et la génération d'un signal de sortie comprenant une série de symboles de sortie ; et
une source optique (508) pour effectuer la transmission d'un signal de sortie comprenant une série de symboles optiques sur la fibre optique, chaque symbole optique ayant l'un de $2^n$ niveaux d'intensité ; et
dans lequel le symboliseur est en outre opérationnel pour modifier une propriété de signal de chaque symbole optique en fonction d'une propriété de signal d'un symbole optique précédent et d'une propriété de signal d'un symbole optique suivant.

73. Liaison de transmission selon la revendication 72, dans lequel le signal de données d'entrée est reçu de m canaux distincts, dans lequel le signal de sortie a un débit de données n fois supérieur à celui des m canaux distincts.

74. Liaison de transmission selon la revendication 72, dans lequel le signal d'entrée numérique est reçu d'un canal unique.

75. Liaison de transmission selon la revendication 72, dans lequel le symboliseur comprend en outre un circuit de prédistorsion.

76. Liaison de transmission selon la revendication 75, dans lequel le circuit de prédistorsion est en outre opérationnel pour effectuer l'interrogation du signal de sortie pour déterminer la propriété de signal du premier symbole de sortie.

77. Liaison de transmission selon la revendication 75, dans lequel le circuit de prédistorsion est en outre opérationnel pour effectuer l'interrogation du signal de sortie pour déterminer la propriété de signal du symbole de sortie précédent.

78. Liaison de transmission selon la revendication 75, dans lequel le circuit de prédistorsion est en outre opérationnel pour effectuer l'interrogation du signal de sortie pour déterminer la propriété de signal du symbole de sortie suivant.

79. Liaison de transmission selon la revendication 75, dans lequel le circuit de prédistorsion effectue la fonction d'accès à une table de consultation pour déterminer une modification appropriée du symbole optique transmis.

80. Liaison de transmission selon la revendication 75, dans lequel la propriété de signal du premier symbole de sortie est une amplitude du premier signal de sortie et le circuit de prédistorsion est en outre opérationnel pour effectuer la modification du premier symbole de sortie en modifiant l'amplitude du premier symbole de sortie.

81. Liaison de transmission selon la revendication 80, dans lequel le circuit de prédistorsion est en outre opérationnel pour effectuer la modification de l'amplitude du premier symbole de sortie sur la base de l'amplitude du premier symbole de sortie.

82. Liaison de transmission selon la revendication 80, dans lequel le circuit de prédistorsion est en outre opérationnel pour effectuer la modification de l'amplitude du premier symbole de sortie sur la base de l'amplitude du symbole de sortie suivant.

83. Liaison de transmission selon la revendication 80, dans lequel le circuit de prédistorsion est en outre opérationnel pour effectuer la modification de l'amplitude du premier symbole de sortie sur la base de l'amplitude du symbole de sortie précédent.

84. Liaison de transmission selon la revendication 75, dans lequel la propriété de signal du premier symbole de sortie est une phase du premier signal de sortie et le circuit de prédistorsion est en outre opérationnel pour effectuer la modification du premier symbole de sortie en modifiant la phase du premier symbole de sortie.

85. Liaison de transmission selon la revendication 84, dans lequel le circuit de prédistorsion est en outre opérationnel pour effectuer la modification de la phase du premier symbole de sortie sur la base de la phase du premier symbole de sortie.

86. Liaison de transmission selon la revendication 84, dans lequel le circuit de prédistorsion est en outre opérationnel pour effectuer la modification de la phase du premier symbole de sortie sur la base de la phase du symbole de sortie suivant.

87. Liaison de transmission selon la revendication 84, dans lequel le circuit de prédistorsion est en outre opérationnel pour effectuer la modification de la phase du premier symbole de sortie sur la base de la phase du symbole de sortie précédent.

88. Liaison de transmission selon la revendication 75, dans lequel la propriété de signal du premier symbole de sortie est une fréquence du premier signal de sortie et le circuit de prédistorsion est en outre opérationnel pour effectuer la modification du premier symbole de sortie en modifiant la fréquence du premier symbole de sortie.

89. Liaison de transmission selon la revendication 88, dans lequel le circuit de prédistorsion est en outre opérationnel pour effectuer la modification de la fréquence du premier symbole de sortie sur la base de la fréquence du premier symbole de sortie.

90. Liaison de transmission selon la revendication 88, dans lequel le circuit de prédistorsion est en outre opérationnel pour effectuer la modification de la fréquence du premier symbole de sortie sur la base de la fréquence du symbole de sortie précédent.

91. Liaison de transmission selon la revendication 88, dans lequel le circuit de prédistorsion est en outre opérationnel pour effectuer la modification de la fréquence du premier symbole de sortie sur la base de la fréquence du symbole de sortie suivant.

92. Liaison de transmission selon la revendication 72, comprenant en outre un désymboliseur comprenant un photodétecteur, un circuit de post-compensation et un décodeur.

93. Liaison de transmission selon la revendication 92, dans lequel le désymboliseur est associé à un récepteur connecté fonctionnellement à la fibre optique, et dans lequel le désymboliseur est opérationnel pour effectuer le décodage du signal de sortie en n flux de sortie, chaque flux de sortie ayant un débit de données égal à 1/n du débit de données de signal de sortie.

94. Émetteur optique (202) pour générer un signal de communication par fibre optique à transmettre sur une fibre optique (204), l'émetteur optique étant comprenant :

un symboliseur (510, 502, 504, 506, 512) pour effectuer la réception d'un signal de données d'entrée comprenant m flux de données d'entrée, chaque flux de données d'entrée comprenant une série d'impulsions, chaque impulsion ayant l'un de deux niveaux d'impulsion distincts, **caractérisé en ce que** le symboliseur est opérationnel pour effectuer la création d'un mot d'entrée numérique à m bits ayant m bits qui comprend un bit de chacun des m flux de données d'entrée et le mappage du mot d'entrée numérique à m bits en un mot d'entrée numérique résistant aux erreurs ayant n bits, où $n \geq m$, et en outre opérationnel pour effectuer la conversion de chaque mot d'entrée numérique résistant aux erreurs en un symbole de sortie correspondant représentant l'une de $2^n$ valeurs distinctes, et la génération d'un signal de sortie comprenant une série de symboles de sortie ; et
une source optique (508) pour effectuer la transmission d'un signal de sortie comprenant au moins un symbole optique sur la fibre optique, chaque symbole optique étant représenté par l'un de $2^n$ niveaux d'intensité optique ; et
dans lequel le symboliseur comprend en outre un circuit linéariseur (512) opérationnel pour effectuer l'introduction d'un décalage correctif dans le signal de sortie pour neutraliser une réponse non linéaire associée à la source optique.

95. Émetteur optique selon la revendication 94, dans lequel le signal de données d'entrée est reçu de m canaux distincts, dans lequel le signal de sortie a un débit de données n fois supérieur à celui des m canaux distincts.

96. Émetteur optique selon la revendication 94, dans lequel le signal de données d'entrée est reçu d'un canal unique.

97. Émetteur optique selon la revendication 94, dans lequel un courant d'entraînement commande la source optique.

98. Émetteur optique selon la revendication 94, dans lequel le circuit linéariseur est en outre opérationnel pour réduire le courant d'entraînement associée au signal de sortie par un courant d'erreur.

99. Émetteur optique selon la revendication 94, dans lequel le circuit linéariseur comprend un élément non linéaire opérationnel pour dériver le courant d'erreur à partir du courant d'entraînement.

100. Émetteur optique selon la revendication 94, dans lequel le décalage correctif comprend une réduction de la tension d'entraînement associée au signal de sortie d'une tension d'erreur.

**101.** Procédé d'augmentation du débit de données d'un système de communication par fibre optique existant sans remplacement d'une installation de fibre optique associée au système de communication par fibre optique existant, dans lequel le procédé comprenant les étapes de :

remplacement d'un émetteur existant par un émetteur de mise à niveau ayant un symboliseur pour effectuer la réception d'un signal de données d'entrée comprenant des flux de données d'entrée, chaque flux de données d'entrée comprenant une série d'impulsions, chaque impulsion ayant l'un de deux niveaux d'impulsion distincts, dans lequel le symboliseur est opérationnel pour effectuer la création d'un mot d'entrée numérique à m bits ayant m bits comprenant un bit de chacun des m flux de données d'entrée et le mappage du mot d'entrée numérique à m bits en un mot d'entrée numérique résistant aux erreurs ayant n bits, où $n \geq m$, et en outre opérationnel pour effectuer la conversion de chaque mot d'entrée numérique résistant aux erreurs en un symbole de sortie correspondant représentant l'une de $2^n$ valeurs distinctes, et la génération d'un signal de sortie comprenant une série de symboles de sortie ; et

remplacement d'un récepteur existant par un récepteur de mise à niveau ayant un désymboliseur opérationnel pour effectuer la réception et le décodage d'un signal de sortie généré par l'émetteur de mise à niveau, le signal de sortie comprenant une série de symboles de sortie.

**102.** Procédé selon la revendication 101, dans lequel le symboliseur est en outre opérationnel pour effectuer la conversion de chaque symbole de sortie en symbole protégé contre les erreurs à n bits en utilisant un codage de protection d'erreur, et le signal de sortie transmis comprend un débit de données n fois supérieur à un débit de données associé à chacun des signaux de données d'entrée distincts.

*Fig. 1*

EP 1 374 515 B1

200

Head 202 206 Terminal

*m*-channel WDM multiplexer

*m*-channel WDM demultiplexer

Data$_{1,1}$
Data$_{1,2}$
...
Data$_{1,n}$ | Tx$_1$ | $\lambda_1$

Data$_{2,1}$
Data$_{2,2}$
...
Data$_{2,n}$ | Tx$_2$ | $\lambda_2$

Data$_{m,1}$
Data$_{m,2}$
...
Data$_{m,n}$ | Tx$_m$ | $\lambda_m$

Optical fiber

204

$\lambda_1$ | Rx$_1$ | Data$_{1,1}$
Data$_{1,2}$
...
Data$_{1,n}$

$\lambda_2$ | Rx$_2$ | Data$_{2,1}$
Data$_{2,2}$
...
Data$_{2,n}$

$\lambda_m$ | Rx$_m$ | Data$_{m,1}$
Data$_{m,2}$
...
Data$_{m,n}$

208 210 212

*Fig. 2*

Fig. 3

Possible 4-bit combinations

300

302  304  306

1111
1110
1101
1100
1011
1010
1001
1000
0111
0110
0101
0100
0011
0010
0001
0000

t

EP 1 374 515 B1

*Fig. 4*

EP 1 374 515 B1

**Transmitter**

*Fig. 5*

600

**Transmitter**

Clock →

Data Input — m ⇏ | Error Protection Coding | — n ⇏ | Encoder | — n ⇏ | Pre-distorter | — n+k ⇏ | DAC | → | Linearizer | → | Optical Source | Fiber →

604

602

*Fig. 6*

700

Fig. 7

Fig. 8

EP 1 374 515 B1

900

Source #:                    1        2        3   ● ● ●  N

Currents:  $\dfrac{I_{mod}}{\beta}$   $\dfrac{I_{mod}}{2^N-1}$   $2\cdot\dfrac{I_{mod}}{2^N-1}$   $4\cdot\dfrac{I_{mod}}{2^N-1}$

Areas:   $\dfrac{A_o}{\beta}$   $\dfrac{A_o}{2^N-1}$   $2\cdot\dfrac{A_o}{2^N-1}$   $4\cdot\dfrac{A_o}{2^N-1}$

902        904        906        908

*Fig. 9*

*Fig. 10*

EP 1 374 515 B1

*Fig. 11*

Fig. 12

*Fig. 13*

EP 1 374 515 B1

1400

## Linearization Circuit

$I'_d = I_d - I_e$

V

$R_d$

NLE
I(V)

$I_d$

$I_e$

Light
Output

Laser
Diode

1404

*Fig. 14*

Fig. 15

*Fig. 16*

EP 1 374 515 B1

EP 1 374 515 B1

*Fig. 17*

Fig. 18

*Fig. 19*

Fig. 20

EP 1 374 515 B1

2100

Noisy data
stream

Clk/2

S

ADC1

Latch1

2102

Sample & Hold

Clk/2

S

ADC2

Latch2

2104

*Fig. 21*

*Fig. 22*

$\Phi_1(t)$    $T = clk/N$    time

$\Phi_2(t)$    time

$\Phi_3(t)$    time

$\Phi_N(t)$    time

2200

EP 1 374 515 B1

*Fig. 23*

*Fig. 24*

Fig. 25

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 25759800 P
- US 25759600 P
- US 25758600 P
- US 25755100 P
- US 28445701 P
- US 27991601 P
- US 28152601 P
- US 28607001 P
- US 28494901 P
- US 28496401 P
- US 30471801 P
- US 28967401 P
- EP 0656700 A
- JP 200244586 A
- US 5351148 A
- US 5870668 A
- US 2632058 A

**Non-patent literature cited in the description**

- **GIBSON.** Digital and Analog Communications. Macmillan Publishing Company, 1993